# EUROPEAN PATENT APPLICATION

(11) **EP 2 810 993 A1**
(43) Date of publication of application: **10.12.2014**
(21) Application number: 13743039.3
(22) Date of filing: 11.01.2013
(51) Int. Cl.: C09D 11/00, B41J 2/01, B41M 5/00

(54) **WATER-BASED INK COMPOSITION AND IMAGE FORMATION METHOD**

(30) Priority: 01.02.2012 JP 2012019729
(71) Applicant: Fujifilm Corporation, Minato-ku Tokyo 106-8620 (JP)
(72) Inventor: NAKANO Ryoichi, Ashigarakami-gun Kanagawa 258-8577 (JP); SHIMOHARA Norihide, Ashigarakami-gun Kanagawa 258-8577 (JP)
(74) Representative: Morpeth, Fraser Forrest
(86) International application number: PCT/JP2013/050373
(87) International publication number: WO 2013/114929

(57) **Abstract**

The aqueous ink composition contains (A) a polymer that has an SP value of 18.6 to 20 and contains a hydrophilic group-containing repeating unit (a1) of 5% to 45% by mass, (B) a pigment, (C) water, and (D) an organic solvent represented by the following Formula (I).

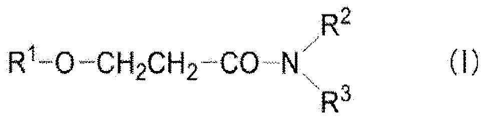

## Description

### BACKGROUND OF THE INVENTION

### 1. Field of the Invention

The present invention relates to an aqueous ink composition and an image forming method.

### 2. Description of the Related Art

As image recording methods by which an image is formed on a recording medium such as paper based on an image data signal, there are electrophotographic methods, sublimation-type and fusion-type thermal transfer methods, inkjet methods, and the like. The electrophotographic method requires a process for forming an electrostatic latent image on a photoreceptor drum by means of charging or light exposure, and this leads to problems that the system becomes complicated, and accordingly the production cost increases. The apparatus used for the thermal transfer method is inexpensive. However, since the above-mentioned method uses an ink ribbon, there are problems that the running cost is high, and wastes are created.

Meanwhile, in the inkjet method, an inexpensive apparatus is used, and an image is directly formed on a recording medium by ejecting an ink only to a portion in which the image needs to be formed. Therefore, this method has advantages that the ink can be efficiently used, and the running cost is low. Moreover, this method generates less noise, and accordingly, it is excellent as an image recording method.

Among ink compositions used for recording images by the inkjet method, an actinic energy ray-curable aqueous ink can be suitably used for printing of images, preprocessing for imparting printability on a recording medium, postprocessing such as protecting and decorating printed images, and the like. Furthermore, containing water as a main component, the actinic energy ray-curable aqueous ink exhibits excellently safety. Therefore, the inkjet method is a promising technique which has multiple excellent properties.

An example of basic constituent materials of the actinic energy ray-curable aqueous ink includes a polymerization initiator, which initiates polymerization by generating radicals and the like by means of water, a polymerizable substance, and an actinic energy ray, and a colorant (a pigment or a dye). Among these, the polymerizable substance or the polymerization initiator is prepared in an emulsion state or is in a solution state by acquiring water solubility by an appropriate substituent.

Examples of the polymerizable substance and polymerization initiator having water solubility include the materials disclosed in JP2005-307199A which discloses an ink composition for inkjet recording that can produce a film having excellent adhesiveness and the like by being irradiated with light.

Moreover, JP2007-119449A discloses an ink composition containing an actinic energy ray-polymerizable substance having a specific maleimide structure.

In addition, an aqueous ink for inkjet recording that uses, as a hydrophilic polymer, an acrylic resin obtained by copolymerizing (meth)acrylic acid and the like (for an example, see JP2006-342294A), an aqueous inkjet ink that uses thermoplastic polymer latex (for an example, see JP2000-85238A), an inkjet fluid that uses an aqueous resin such as a styrene-styrene sulfonate copolymer as a pigment-dispersing resin (for an example, see JP2000-144028A), and the like have been proposed.

Furthermore, an aqueous ink composition that uses β-alkoxypropionamide as a solvent and an aqueous resin emulsion or an aqueous polymer compound as a binder resin (for an example, see JP2010-168433A) has also been proposed.

### SUMMARY OF THE INVENTION

However, when an attempt is made to record an image from the inkjet method using the technique disclosed in the aforementioned patent documents, ejection properties become defective in some cases. Moreover, in the techniques, the aqueous ink composition permeates a recording medium to a small extent, and bleeding, which is a so-called landing interference, is easily caused between images that are obtained by depositing droplets of the ink composition by the inkjet method.

Furthermore, the adhesiveness between the recording medium and the image which is obtained by the ink composition is weak, waterproofness of the obtained image is poor, and as a result, resolution of the obtained image is low. In addition, in severe cases, the image is deleted, or color mixing occurs, and accordingly, an image with high color purity is not obtained.

In order to solve the above-mentioned problems, the present invention provides an aqueous ink composition which is excellently ejected when being used in recording an image by an inkjet method, does not cause landing interference, makes a recorded image exhibit excellent adhesiveness with respect to a recording medium, exhibits excellent waterproofness, and makes it possible to obtain a recorded image with high image quality.

The present invention also provides a image forming method using the aqueous ink composition.

Specific means for solving the above problems is as follows.
<1> An aqueous ink composition containing (A) a polymer that has an SP value of 18.6 to 20 and contains a hydrophilic group-containing repeating unit (a1) of 5% to 45% by mass, (B) a pigment, (C) water, and (D) an organic solvent represented by the following Formula (I). 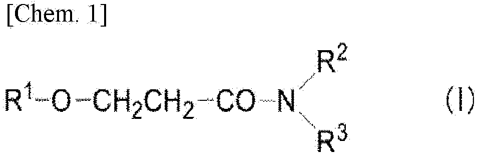
   In Formula (I), R¹ represents an alkyl group having 1 to 8 carbon atoms, and each of R² and R³ independently represents a hydrogen atom or an alkyl group having 1 to 6 carbon atoms that may have an ether bond in a carbon chain. R² and R³ may form a ring by being bonded to each other.
<2> The aqueous ink composition according to <1>, in which the hydrophilic group in the repeating unit (a1) is at least one kind of group selected from a group consisting of a carboxyl group, an amide group, a carbamoyl group, an alkyl-substituted carbamoyl group, an alcoholic hydroxyl group, and a group having a polyalkyleneoxy structure.
<3> The aqueous ink composition according to <1> or <2>, in which the (A) polymer is a polymer further containing a repeating unit (a2) having a group represented by the following Formula (1). 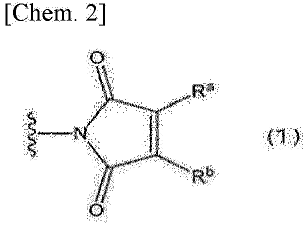
   In Formula (1), each of R^{a} and R^{b} independently represents an alkyl group having 1 to 4 carbon atoms, and R^{a} and R^{b} may form a 4- to 6-membered ring by being bonded to each other. The wavy line represents a position where the group is bonded to a polymer side chain.
<4> The aqueous ink composition according to <3>, in which the (A) polymer has 8 to 1,000 of the group represented by Formula (1) in a single molecule.
<5> The aqueous ink composition according to <3> or <4>, in which the repeating unit (a2) is represented by the following Formula (1-2). 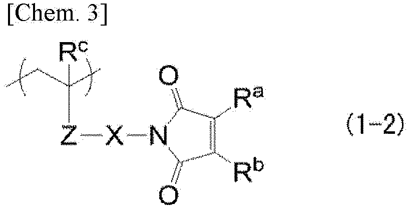
   In Formula (1-2), each of R^{a} and R^{b} independently represents an alkyl group having 1 to 4 carbon atoms, and R^{a} and R^{b} may form a 4- to 6-membered ring by being bonded to each other. Z represents a single bond, -COO-*, or -CONR^{d}-*, and R^{d} represents a hydrogen atom or an alkyl group having 1 to 4 carbon atoms. * represents a position where Z is bonded to X. X represents an alkylene group having 1 to 16 carbon atoms. R^{c} represents a hydrogen atom or a methyl group.
<6> The aqueous ink composition according to any one of <1> to <5>, in which the repeating unit (a1) is represented by the following Formula (2). 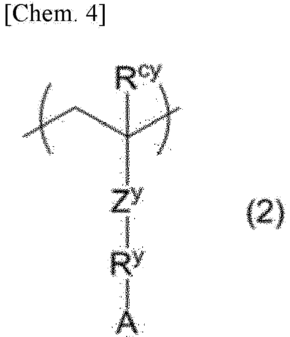
   In Formula (2), R^{cy} represents a hydrogen atom or a methyl group. Z^{y} represents -COO-*, -CONR^{dy}-*, or a single bond, and R^{dy} represents a hydrogen atom or an alkyl group having 1 to 4 carbon atoms. * represents a position where Z^{y} is bonded to R^{y}. R^{y} represents a single bond, an alkylene group having 1 to 20 carbon atoms, an arylene group having 6 to 20 carbon atoms, or an aralkylene group having 7 to 20 carbon atoms. A represents a hydrophilic group.
<7> The aqueous ink composition according to any one of <1> to <6>, in which the content of the (A) polymer is 1% by mass to 30% by mass with respect to the total amount of the aqueous ink composition.
<8> The aqueous ink composition according to any one of <1> to <7>, in which the content of the (C) water is 10% by mass to 97% by mass with respect to the total amount of the aqueous ink composition.
<9> The aqueous ink composition according to any one of <1> to <8>, further containing a surfactant.
<10> The aqueous ink composition according to any one of <1> to <9>, that has ink viscosity of 5 mPa·sec to 30 mPa·sec.
<11> An image forming method including applying the aqueous ink composition according to any one of <1> to <10> onto a recording medium, and removing the (C) water and the (D) organic solvent from the applied aqueous ink composition to dry the aqueous ink composition.

The polymer used in the present invention contains the hydrophilic group-containing repeating unit in an amount of 5% by mass to 45% by mass and has a specific SP value. Therefore, when the polymer is used to form an aqueous ink, it is possible to obtain an ink composition in which the polymer excellently and uniformly dissolves. As a result, when being ejected by an inkjet method, the ink composition of the present invention is stably ejected, and landing interference can be prevented. Moreover, it is possible to obtain a recorded image which is clear, have high resolution, and exhibits excellent waterproofness.

The ink composition of the present invention contains a specific organic solvent represented by Formula (I). Accordingly, it is possible to cause the ink composition of the present invention to permeate a recording medium. It is considered that for this reason, adhesiveness between the recording medium and the recorded image can be greatly improved without causing landing interference.

It is considered that due to the synergistic effect described above, chipping or color mixing does not occur in the recorded image, and the recorded image having high quality and excellent waterproofness can be provided.

Presumably, dispersibility of a pigment dispersant for dispersing a pigment is improved by means of charge repulsion. However, it is difficult for the hydrophilic group in a specific polymer of the present invention to exert an influence on dissociation of ionic groups of a pigment and a pigment dispersant, and it is considered a degree of charge repulsion of a pigment is not easily reduced for this reason. It is considered that as a result, pigment dispersibility can be excellently maintained when the ink composition is prepared and when the ink is stored. It is also considered that since the specific polymer contains a maleimide group, a crosslinking reaction is caused efficiently, and the effects of the present invention are obtained.

According to the present invention, it is possible to provide an aqueous ink composition which is ejected excellently when used in recording an image using an inkjet method, does not cause landing interference, makes a recorded image exhibit excellent adhesiveness with respect to a recording medium, exhibits excellent waterproofness, and makes it possible to obtain a recorded image with high image quality.

Moreover, according to the present invention, it is possible to provide an image forming method using the aqueous ink composition.

### DESCRIPTION OF THE PREFERRED EMBODIMENTS

The aqueous ink composition of the present invention contains (A) a polymer that has an SP value of 18.6 to 20 and contains a hydrophilic group-containing repeating unit (a1) of 5% to 45% by mass (hereinafter, the polymer will be appropriately referred to as "specific polymer), (B) a pigment, (C) water, and (D) an organic solvent represented by the following Formula (I)

Hereinafter, the above essential components will be described in detail. Moreover, other components that may be contained in the aqueous ink composition of the present invention will be described.

In the present specification, "to" is used to describe a range which has numerical values before and after "to" as an lower limit and an upper limit respectively.

Furthermore, in the present specification, when the amount of each component in the composition is mentioned, if the composition contains plural substances corresponding to each component, unless otherwise specified, the amount means a total amount of the plural substances contained in the composition.

In the present specification, a term of "step" includes not only an independent step but also a step which is not clearly distinguished from other steps as long as the step brings about a desired effect.

### <(A) Polymer that Has an SP Value of 18.6 to 20 and Contains a Hydrophilic Group-Containing Repeating Unit (a1) of 5% to 45% by Mass = Specific Polymer>

In the present invention, the specific polymer is required to have an SP value of 18.6 to 20. In the present invention, the SP value is a solubility parameter measured by the Okitsu method.

The Okitsu method is described in detail in Journal of The Adhesion Society of Japan, Vol. 29, No. 5 (1993).

In the present invention, the SP value of the specific polymer is 18.6 to 20, and preferably 18.9 to 19.8.

If the SP value is within the above range, in an aqueous ink composition, solubility of the polymer or water-dispersibility of the polymer is improved, and a uniform ink composition is obtained, furthermore, waterproofness of a recorded image can be improved.

In the present invention, the specific polymer is soluble or dispersible in water. 1 g of the specific polymer is preferably able to dissolve or disperse in water in a volume of less than 30 ml at 25°C, more preferably able to dissolve or disperse in water in a volume of less than 20 ml at 25°C, and particularly preferably able to dissolve or disperse in water in a volume of less than 10 ml at 25°C. From the viewpoint of ejection stability at the time of inkjet drawing and storage stability of the aqueous ink composition, the specific polymer is preferably water-soluble.

Next, the structure of the specific polymer will be described.

### [Hydrophilic Group-Containing Repeating Unit (a1)]

The specific polymer contains the hydrophilic group-containing repeating unit (a1) of 5% to 45% by mass.

The hydrophilic group in the hydrophilic group-containing repeating unit (a1) is a group for enhancing hydrophilicity of the specific polymer, and is not limited as long as it is a non-dissociative group.

The number of the hydrophilic group in the hydrophilic group-containing repeating unit (a1) is not limited. For example, the repeating unit (a1) may contain one or plural hydrophilic groups, and the number is appropriately set according to the type, molecular weight, and the like of the hydrophilic group. When the repeating unit (a1) contains plural hydrophilic groups, the hydrophilic groups may be the same as or different from each other.

The hydrophilic group is not limited, and examples thereof include a residue formed when one hydrogen atom is removed from a heterocycle that contains a nitrogen atom or an oxygen atom as a heteroatom, a carboxyl group, an amide group, a carbamoyl group, an alkyl-substituted carbamoyl group, an alcoholic hydroxyl group, a group having a polyalkyleneoxy structure, and the like. Among these, a carboxyl group, an amide group, a carbamoyl group, an alkyl-substituted carbamoyl group, an alcoholic hydroxyl group, and a group having a polyalkyleneoxy structure are preferable, and a carboxyl group is particularly preferable.

Examples of the heterocycle, which contains a nitrogen atom or an oxygen atom as a heteroatom and forms the aforementioned residue when one hydrogen atom is removed therefrom, include lactones such as γ-butyrolactone, cyclic ureas such as 2-pyrrolidone and ethylene urea, cyclic carbonates such as ethylene carbonate and propylene carbonate, cyclic ethers such as tetrahydrofuran and 1,4-dioxane, and crown ethers such as 12-crwon-4.

The amide group is not limited, and preferable examples thereof include a group represented by the following Formula (11).

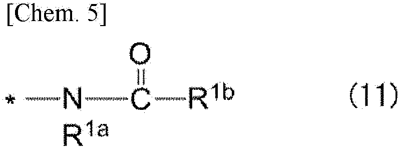

(In Formula (11), each of R^{1a} and R^{1b} independently represents a hydrogen atom or an alkyl group having 1 to 12 carbon atoms. R^{1a} and R^{1b} may form a 4- to 6-membered ring by being bonded to each other. * represents a position where the group is bonded to a polymer side chain.)

Each of R^{1a} and R^{1b} in Formula (11) independently represents a hydrogen atom or an alkyl group having 1 to 12 carbon atoms. The alkyl group represented by R^{1a} and R^{1b} is a linear or branched alkyl group, and may have a -COO- bond, a -O- bond, or a -NH- bond. The number of carbon atom contained in the alkyl group is preferably 1 to 10, more preferably 1 to 6, and most preferably 1 to 3. R^{1a} and R^{1b} may form a 4- to 6-membered ring by being bonded to each other. These groups may or may not have a substituent, but it is preferable for them not to have a substituent. Specific examples of the alkyl group represented by R^{1a} and R^{1b} include a methyl group, a t-butyl group, and the like.

In Formula (11), as the substituent that R^{1a} and R^{1b} may have, a hydroxyl group, an alkoxy group having 1 to 2 carbon atoms, and the like are preferable.

Examples of the alkyl-substituted carbamoyl group include a monoalkyl carbamoyl group formed when a hydrogen atom bonded to an N atom of a carbamoyl group is substituted with an alkyl group, and a dialkyl carbamoyl group formed when two hydrogen atoms bonded to an N atom of a carbamoyl group are substituted with alkyl groups. Specifically, a group represented by the following Formula (12) is a preferable example thereof.

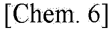

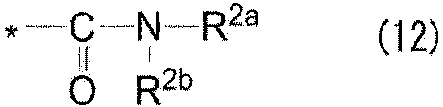

(In Formula (12), each of R^{2a} and R^{2b} independently represents a hydrogen atom or an alkyl group having 1 to 20 carbon atoms. R^{2a} and R^{2b} may form a 4- to 6-membered ring by being bonded to each other. * represents a position where the group is bonded to a polymer side chain.)

Each of R^{2a} and R^{2b} in Formula (12) independently represents a hydrogen atom or an alkyl group having 1 to 20 carbon atoms. The alkyl group represented by R^{2a} and R^{2b} is a linear or branched alkyl group, and may have a -O- bond, a -COO- bond, a -C(=O)- bond. The number of carbon atom contained in the alkyl group is preferably 1 to 10, more preferably 1 to 6, and most preferably 1 to 3. R^{2a} and R^{2b} may form a 4- to 6-membered ring by being bonded to each other. Specific examples of the alkyl group represented by R^{2a} and R^{2b} are not limited and include a metlylene group, an ethylene group, and the like. These groups may or may not have a substituent, but it is preferable for them not to have a substituent.

In Formula (12), as the substituent that R^{2a} and R^{2b} may have, a hydroxyl group, an alkoxy group having 1 to 2 carbon atoms, and the like are preferable.

The group having a polyalkyleneoxy structure is not limited, and preferable examples thereof include a group represented by the following Formula (13).

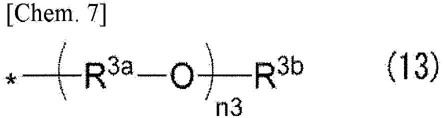

(In Formula (13), R^{3a} represents an alkylene group having 1 to 20 carbon atoms, and R^{3b} represents a hydrogen atom or an alkyl group having 1 to 20 carbon atoms. n3 represents an integer from 4 to 50. Plural R^{3a}s may be the same as or different from each other. * represents a position where the group is bonded to a polymer side chain.)

R^{3a} in Formula (13) represents an alkylene group having 1 to 20 carbon atoms. The alkylene group represented by R^{3a} is a linear, branched, or cyclic alkylene group, and may have a -O- bond or a -COO- bond. The number of carbon atom contained in the alkylene group is preferably 1 to 10, more preferably 1 to 6, and most preferably 1 to 3. Plural R^{3a}s contained in the group represented by Formula (13) may be the same as or different from each other, and it is preferable for R^{3a}s to be the same as each other. These groups may or may not have a substituent, and it is preferable for them not to have a substituent. Specific examples of the alkylene group represented by R^{3a} include an ethylene group and the like.

As the substituent that R^{3a} in Formula (13) may have, a hydroxyl group, an alkoxy group having 1 to 2 carbon atoms, and the like are preferable.

R^{3b} in Formula (13) represents a hydrogen atom or an alkyl group having 1 to 20 carbon atoms. The alkyl group represented by R^{3b} is a linear, branched, or cyclic alkyl group. The number of carbon atom contained in the alkyl group is preferably 1 to 10, more preferably 1 to 6, and most preferably 1 to 3. Specific examples of the alkyl group represented by R^{3b} include a methyl group, an ethyl group, and the like.

n3 in Formula (13) represents an integer from 4 to 50. The integer is more preferably from 4 to 40, and even more preferably from 5 to 30.

The repeating unit (a1) in the specific polymer is more preferably represented by the following Formula (2).

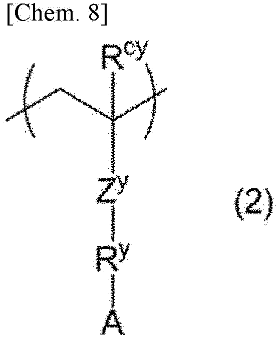

(In Formula (2), R^{cy} represents a hydrogen atom or a methyl group. Z^{y} represents -COO-*, -CONR^{dy}-*, or a single bond, and R^{dy} represents a hydrogen atom or an alkyl group having 1 to 4 carbon atoms. * represents a position where Z^{y} is bonded to R^{y}. R^{y} represents a single bond, an alkylene group having 1 to 20 carbon atoms, an arylene group having 6 to 20 carbon atoms, or an aralkylene group having 7 to 20 carbon atoms. A represents a hydrophilic group.)

In Formula (2), R^{cy} represents a hydrogen atom or a methyl group, and is preferably a methyl group.

In Formula (2), Z^{y} represents -COO-*, -CONR^{dy}-*, or a single bond, and is preferably -COO-*. * represents a position where Z^{y} is bonded to R^{Y}. R^{dy} represents a hydrogen atom or an alkyl group having 1 to 4 carbon atoms. The alkyl group having 1 to 4 carbon atoms may have a linear structure or a branched structure. Specifically, the alkyl group represents a methyl group, an ethyl group, a propyl group, an isopropyl group, a butyl group, an isobutyl group, a sec-butyl group, or a t-butyl group. R^{dy} is preferably a hydrogen atom or an alkyl group having 1 to 2 carbon atoms, that is, a methyl group or an ethyl group. R^{dy} is particularly preferably a hydrogen atom. R^{dy} may or may not have a substituent, but it is preferable for R^{dy} not to have a substituent.

Examples of the substituent that R^{dy} may have include an alkoxy group having 1 to 4 carbon atoms, a hydroxyl group, and the like.

In Formula (2), R^{y} represents a single bond, an alkylene group having 1 to 20 carbon atoms, an arylene group having 6 to 20 carbon atoms, or an aralkylene group having 7 to 20 carbon atoms. R^{y} is preferably an alkylene group having 1 to 20 carbon atoms, an arylene group having 6 to 20 carbon atoms, or an aralkylene group having 7 to 20 carbon atoms. These groups may have a substituent. Moreover, these groups may contain an ether bond, an ester bond, an amide bond, or a urethane bond. R^{y} in Formula (2) is preferably a single bond.

Examples of the substituent that R^{y} may have include an alkoxy group having 1 to 4 carbon atoms, a hydroxyl group, and the like.

When R^{y} is an alkylene group having 1 to 20 carbon atoms, the alkylene group may have a linear structure, a branched structure, or a cyclic structure. When R^{y} is an alkylene group, the number of carbon atom contained in R^{y} is more preferably 2 to 12, and even more preferably 2 to 8. Specific examples of the alkylene group represented by R^{y} include -CH₂-, -C₂H₄-, -C(CH₃)₂-CH₂-, -CH₂C(CH₃)₂-CH₂-, -C₆H₁₂-, -C₄H₇(C₄H₉)₂C₄H₈-, C₁₈H₃₆, a 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, -C₂H₄-CONH-, -C₄H₈-OCONH-C₆H₁₂-, -CH₂-OCONHC₁₀H₂₀-, -CH₂C(OH)CH₂-, and the like.

When R^{y} is an arylene group having 6 to 20 carbon atoms, the number of carbon atoms contained in the arylene group is preferably 6 to 18, more preferably 6 to 14, and most preferably 6 to 10. Specific examples of the arylene group represented by R^{y} include a phenylene group, -C₆H₄-CO-C₆H₄-, and the like.

When R^{y} is an aralkylene group having 7 to 20 carbon atoms, the number of carbon atoms contained in the aralkylene group is preferably 7 to 18, more preferably 7 to 14, and most preferably 7 to 10. Specific examples of the aralkylene group include -C₃H₆-C₆H₄-, -C₂H₄-C₆H₄-C₆H₄-, -CH₂-C₆H₄-C₆H₄-C₂H₄-, -C₂H₄-OCO-C₆H₄-, and the like.

The hydrophilic group represented by A is not limited, and examples thereof include a residue formed when one hydrogen atom is removed from a heterocycle that contains a nitrogen atom or an oxygen atom as a heteroatom, a carboxyl group, an amide group, a carbamoyl group, an alkyl-substituted carbamoyl group, an alcoholic hydroxyl group, a group having a polyalkyleneoxy structure, and the like. Among these, a carboxyl group, an amide group, a carbamoyl group, an alkyl-substituted carbamoyl group, an alcoholic hydroxyl group, and a group having a polyoxyalkyleneoxy structure are preferable.

As a group represented by -Z^{y}-R^{y}-A, a carboxyl group is particularly preferable.

The hydrophilic group represented by A is the same as the hydrophilic group contained in the hydrophilic group-containing repeating unit (a1), and the preferable range thereof is also the same.

The repeating unit represented by Formula (2) can be obtained by polymerizing a monomer represented by the following Formula (2-1)

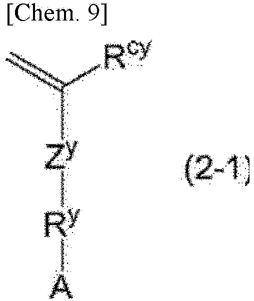

R^{cy}, Z^{y}, R^{y}, and A in Formula (2-1) have the same definition as R^{cy}, Z^{y}, R^{y}, and A in Formula (2) respectively, and preferable range thereof is also the same.

Preferable examples of the monomer represented by Formula (2-1) are not limited and include following example compounds (2-1-1) to (2-1-13). The example compounds (2-1-1) and (2-1-2) are monomers that can form a repeating unit having an amide group. (2-1-3) is a monomer that can form a repeating unit having a carbamoyl group. (2-1-4) to (2-1-6) are monomers that can from a repeating unit having an alkyl-substituted carbamoyl group. (2-1-7) to (2-1-9) are monomers that can form a repeating unit having a polyalkyleneoxy structure. (2-1-10) is a monomer that can form a repeating unit having a residue which is formed when one hydrogen atom is removed from a heterocycle containing an oxygen atom as a heteroatom. (2-1-11) to (2-1-13) are monomers that can form a repeating unit having an alcoholic hydroxyl group. The present invention is not limited to these example compounds.

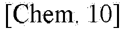

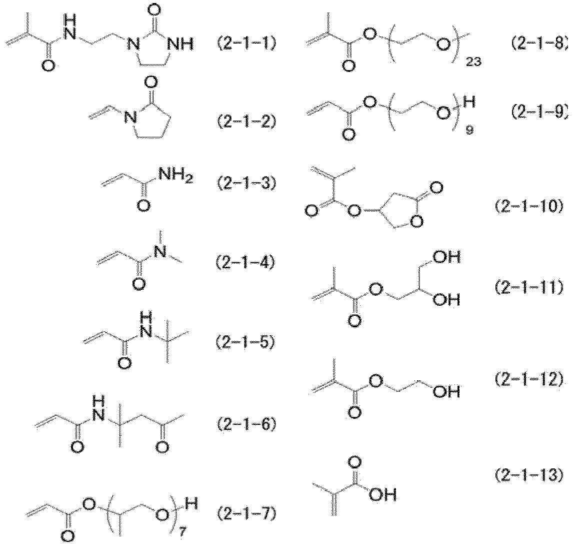

As the monomer represented by Formula (2-1), commercially available compounds can be used. Alternatively, the monomer can be produced by conventionally known methods.

The monomer represented by Formula (2-1) may be used for causing a polymerization reaction with a monomer which forms a repeating unit having a hydrophilic group protected with a protective group. After the monomer is used to form a polymer compound by a polymerization reaction, the protective group is dissociated, whereby the specific polymer of the present invention may be synthesized. For example, in order to introduce a repeating unit of polyvinyl alcohol as a hydrophilic group, it is possible to use a method of forming a polymer by polymerizing vinyl acetate and vinyl benzoate as monomers and then causing hydrolysis by using an alkali or an acid.

The content of the hydrophilic group-containing repeating unit (a1) in the specific polymer is preferably 5% to 45%, more preferably 10% to 40%, and particularly preferably 12% to 30% with respect to the specific polymer based on mass.

If the content is within the above range, solubility of the specific polymer becomes excellent, and an uniform aqueous ink composition can be obtained.

### [Repeating Unit (a2) Having Group Represented by Formula (1)]

It is preferable for the specific polymer to contain a repeating unit (a2) having a group represented by the following Formula (1).

It is preferable for the specific polymer of the present invention to contain the repeating unit having a group represented by Formula (1) and to accelerate a crosslinking reaction of the aqueous ink composition.

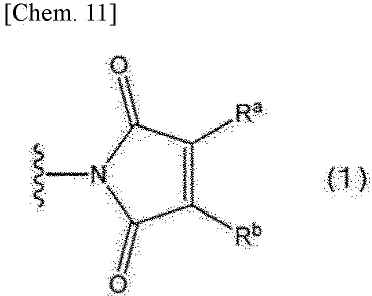

(In Formula (1), each of R^{a} and R^{b} independently represents an alkyl group having 1 to 4 carbon atoms, and R^{a} and R^{b} may form a 4- to 6-membered ring by being bonded to each other. The wavy line represents a position where the group is bonded to a polymer side chain.)

In Formula (1), each of R^{a} and R^{b} independently represents an alkyl group having 1 to 4 carbon atoms. The alkyl group is preferably an alkyl group having 1 to 2 carbon atoms, and most preferably an alkyl group having 1 carbon atom.

These groups may have a linear structure or a branched structure. Specific examples of the groups include a methyl group, an ethyl group, a propyl group, an isopropyl group, a butyl group, an isobutyl group, a sec-butyl group, a t-butyl group, and the like. R^{a} and R^{b} may form a 4- to 6-membered ring by being bonded to each other. When R^{a} and R^{b} form a 4-to 6-membered ring, it is preferable for the ring to have an alicyclic structure.

R^{a} and R^{b} may or may not have a substituent, but it is preferable for them not to have a substituent.

Specific examples of the group represented by Formula (1) that is a group preferable for the specific polymer of the present invention are as follows.

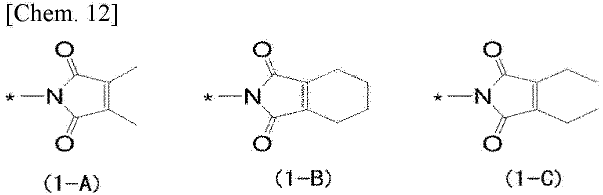

The repeating unit (a2) having the group represented by Formula (1) is preferably represented by the following Formula (1-2). 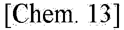 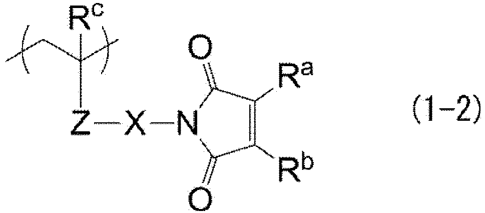 (In Formula (1-2), each of R^{a} and R^{b} independently represents an alkyl group having 1 to 4 carbon atoms, and R^{a} and R^{b} may form a 4- to 6-membered ring by being bonded to each other. Z represents a single bond, -COO-*, or -CONR^{d}-*, and R^{d} represents a hydrogen atom or an alkyl group having 1 to 4 carbon atoms. * represents a position where Z is bonded to X. X represents an alkylene group having 1 to 16 carbon atoms. R^{c} represents a hydrogen atom or a methyl group.)

R^{a} and R^{b} in Formula (1-2) have the same definition as R^{a} and R^{b} exemplified in the aforementioned Formula (1), and the preferable embodiment thereof is also the same.

In Formula (1-2), R^{c} represents a hydrogen atom or a methyl group. R^{c} is preferably a methyl group.

In Formula (1-2), Z represents -COO-* or -CONR^{d}-*. Z is preferably -COO-*. * represents a position where Z is bonded to X.

R^{d} represents a hydrogen atom or an alkyl group having 1 to 4 carbon atoms. The alkyl group having 1 to 4 carbon atoms may have a linear structure or a branched structure. Specifically, the alkyl group represents a methyl group, an ethyl group, a propyl group, an isopropyl group, a butyl group, an isobutyl group, a sec-butyl group, or a t-butyl group. R^{d} is preferably a hydrogen atom or an alkyl group having 1 to 2 carbon atoms, that is, a methyl group or an ethyl group. R^{d} is particularly preferably a hydrogen atom. R^{d} may or may not have a substituent, but it is preferable for R^{d} not to have a substituent.

In Formula (1-2), X represents an alkylene group having 1 to 16 carbon atoms, and is preferably an alkylene group having 2 to 8 carbon atoms. The alkylene group may have a linear structure, a branched structure, or a cyclic structure. Moreover, the alkylene group may contain an ether bond, an ester bond, an amide bond, a urethane bond, or an arylene group.

In Formula (1-2), each of R^{a} and R^{b} is preferably an alkyl group having 1 to 2 carbon atoms; R^{c} is preferably a methyl group; Z is preferably -COO-; and X is preferably an alkylene group having 2 to 12 carbon atoms.

When the specific polymer contains the repeating unit represented by Formula (1-2), it is preferable for the specific polymer to be a polymer obtained using a monomer represented by the following Formula (1-3).

The content of the repeating unit represented by Formula (1-2) in the specific polymer is 5% to 60%, more preferably 10% to 50%, and even more preferably 10% to 40% with respect to the specific polymer based on mass.

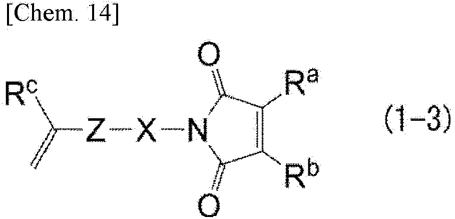

R^{a}, R^{b}, R^{c}, Z, and X in Formula (1-3) have the same definition as R^{a}, R^{b}, R^{c}, Z, and X in Formula (1-2), and preferable examples thereof are also the same.

Preferable examples of the monomer represented by Formula (1-3) include the following compounds (1-1-1) to (1-1-11), but the present invention is not limited thereto.

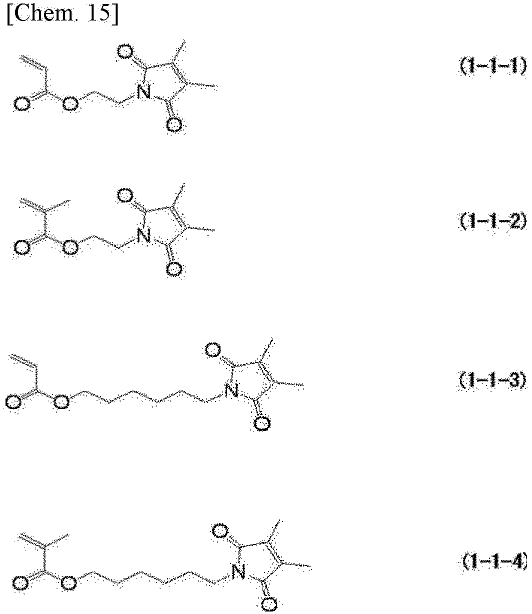

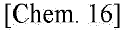

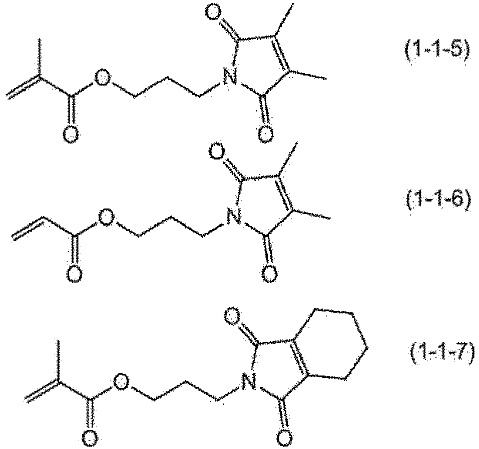

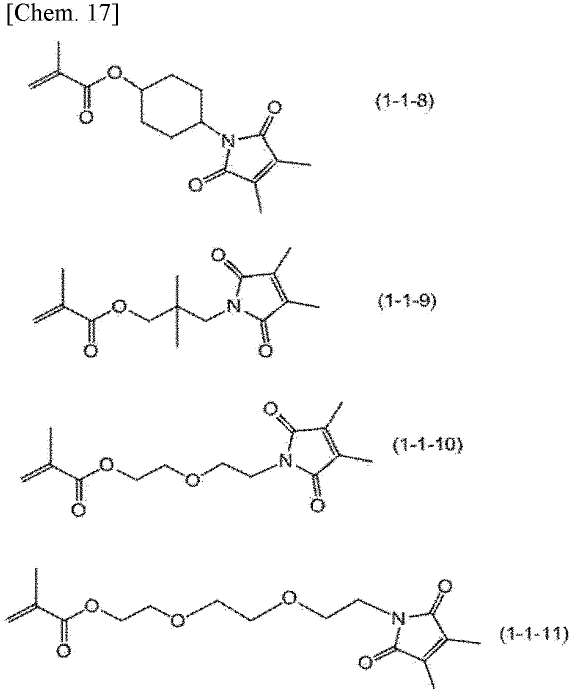

The monomers (1-1-1) to (1-1-11) that form the repeating unit represented by Formula (1-2) of the present invention can be produced with reference to methods disclosed in, for example, JP1977-988A (JP-S52-988A), JP1992-251258A (JP-H4-251258A), and the like.

It is preferable for the specific polymer to contain hydrophilic group-containing repeating unit (a1) and the repeating unit (a2) having a group represented by Formula (1). However, repeating units other than the above repeating units are not limited, and it is possible to use polymer structure such as polyacrylate, polyester, polyethylenimine, or polystyrene. From the viewpoint of ejection properties or production suitability of the ink composition, it is preferable for the specific polymer to be a vinyl polymer.

The specific polymer of the present invention can use other monomer components as a polymer.

Examples of other monomers that can be copolymerized with the monomer represented by Formula (1-3) and the monomer having the structure represented by Formula (2-1) include styrene, p-methoxystyrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, dexyl (meth)acrylate, stearyl (meth)acrylate, cyclohexyl (meth)acrylate, bornyl (meth)acrylate, isobornyl (meth)acrylate, benzyl (meth)acrylate, 2-ethylhexyldiglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, butoxydiethylene glycol (meth)acrylate, trifluoroethyl (meth)acrylate, perfluorooctyl ethyl (meth)acrylate, 2-hydroxy-3-phenoxypropyl (meth)acrylate, and p-sulfamoylphenyl (meth)acrylamide.

Among these, alkyl (meth)acrylate having 1 to 8 carbon atoms, such as methyl (meth)acrylate, ethyl (meth)acrylate, butyl (meth)acrylate, hexyl (meth)acrylate, and 2-ethylhexyl (meth)acrylate, are more preferable.

If necessary, it is also possible to use known monomers other than the above.

It is preferable for the specific polymer to have a structure represented by the following Formula (A).

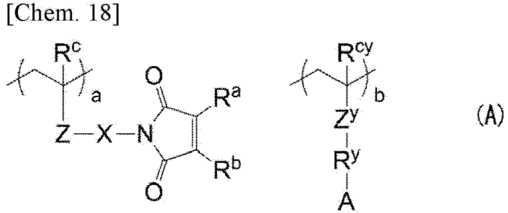

R^{a}, R^{b}, R^{c}, Z, and X in Formula (A) have the same definition as R^{a}, R^{b}, R^{c}, Z, and X in Formula (1-2), and a preferable range thereof is also the same.

R^{cy}, Z^{y}, R^{y}, and A in Formula (A) have the same definition as R^{cy}, Z^{y}, R^{y}, and A in Formula (2), and a preferable range thereof is also the same.

In Formula (A), a and b represent a copolymerization ratio in the specific polymer, and the sum of a and b is 100 (the copolymerization ratio is based on mass). a in the copolymerization ratio represents a proportion of the copolymerized repeating unit (a2) having the group represented by Formula (1), and b represents a proportion of the copolymerized hydrophilic group-containing repeating unit (a1). a and b preferably satisfy 15 ≤ at 95 and 5 ≤ b ≤ 75, and more preferably satisfy ≤ a ≤ 90 and ≤ b ≤ 45.

The specific polymer having the structure represented by Formula (A) is not limited, and examples thereof include the following example compounds (A-1) to (A-9). Among these, (A-1) to (A-4) are preferable.

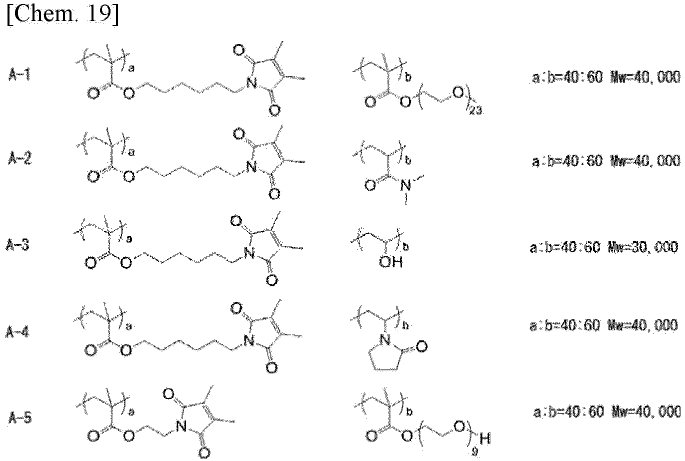

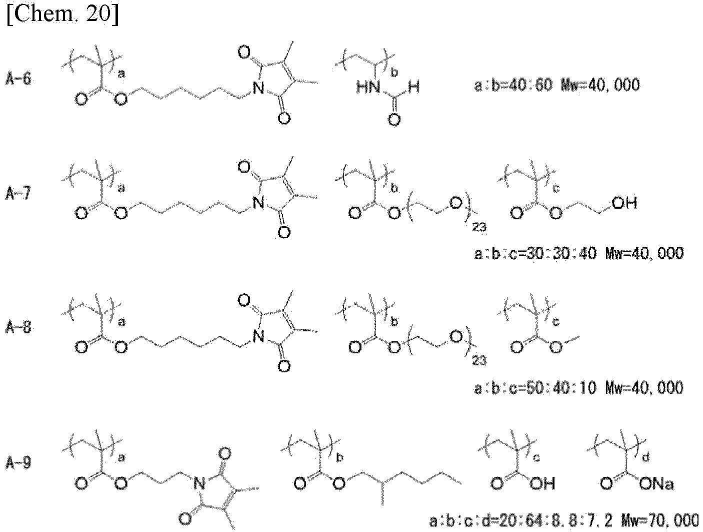

The weight average molecular weight of the specific polymer is preferably 2,000 to 200,000, more preferably 2,000 to 150,000, and most preferably 2,000 to 100,000.

The number of the group represented by Formula (1) contained in a single molecule of the specific polymer is preferably 8 or greater, more preferably 8 to 1,000, even more preferably 10 to 700, and most preferably 10 to 500. From the viewpoint of fixability, it is preferable for the specific polymer to contain 8 or more of the groups represented by Formula (1).

The number of the group represented by Formula (1) contained in the specific polymer can be determined by the weight average molecular weight and the copolymerization ratio of the specific polymer. For example, provided that the specific polymer is a binary copolymer; a copolymerization ratio between a repeating unit having a molecular weight of M_{A} and a repeating unit having a molecular weight of M_{B} is X^{A}:X^{B} in terms of mass; and the weight average molecular weight of the specific polymer is M_{X}, the number of the group represented by Formula (1) contained in the specific polymer can be calculated by {M_{X} × [X^{A}/(X^{A} + X^{B})]}/M_{A} (number).

The weight average molecular weight is measured by gel permeation chromatography (GPC). GPC is performed by HLC-8020GPC (manufactured by TOSOH CORPORATION) by using TSKgel SuperHZM-H, TSKgel SuperHZ4000, and TSKgel SuperHZ200 (manufactured by TOSOH CORPORATION, 4.6 mm ID × 15 cm) as columns and tetrahydrofuran (THF) as an eluent.

The specific polymer of the present invention, such as example compounds (A-1) to (A-8), can be obtained by polymerizing the precursor or the like represented by Formula (1-3) or (2-1) by known polymerization methods. For example, the specific polymer can be produced by methods based on the polymerization methods disclosed in JP1997-988A (JP-S52-988A), JP1980-154970A (JP-S55-154970A), Langmuir, Vol. 18, No. 14, pp 5414-5421 (2002), and the like.

The content of the specific polymer in the aqueous ink composition is preferably 1% by mass to 40% by mass, more preferably 1% by mass to 30% by mass, even more preferably 2% by mass to 30% by mass, and particularly preferably 3% by mass to 20% by mass.

### <(D) Organic Solvent Represented by Formula (I)>

The aqueous ink composition of the present invention contains an organic solvent represented by the following Formula (I).

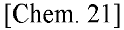

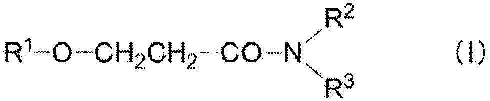

(In Formula (I), R¹ represents an alkyl group having 1 to 8 carbon atoms, and each of R² and R³ independently represents a hydrogen atom or an alkyl group having 1 to 6 carbon atoms that may have an ether bond in carbon. R² and R³ may form a ring by being bonded to each other.)

If the aqueous ink composition of the present invention contains the organic solvent represented by Formula (I), when being applied onto a recording medium, the aqueous ink composition can permeate the recording medium to a high degree, and adhesiveness between the obtained image and the recording medium can be improved.

Moreover, solubility of the specific polymer in the aqueous ink composition becomes excellent, and accordingly, a uniform ink composition can be obtained.

In Formula (I), R¹ is an alkyl group having 1 to 8 carbon atoms, but R¹ is preferably an alkyl group having 1 to 6 carbon atoms.

Preferable examples of the alkyl group represented by R¹ include a methyl group, an ethyl group, a propyl group, a butyl group, and a hexyl group. Among these, a methyl group, an ethyl group, a propyl group, and a butyl group are preferable.

As the alkyl group having 1 to 6 carbon atoms that is represented by R² and R³, an alkyl group having 1 to 3 carbon atoms is preferable. Preferable examples of the alkyl group represented by R² and R³ include a methyl group, an ethyl group, and a propyl group, and among these, a methyl group and an ethyl group are preferable.

Specific examples of the organic solvent represented by Formula (I) are as follows, but the present invention is not limited thereto.

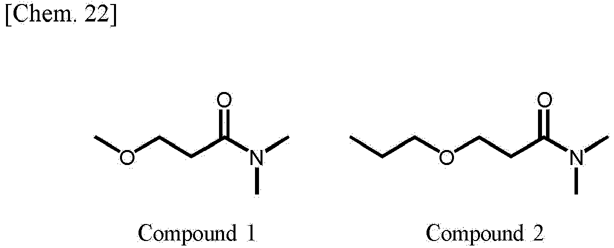

The content of the organic solvent represented by Formula (I) in the aqueous ink composition of the present invention is preferably 5% to 45% based on mass and more preferably 10% to 40% based on mass.

If the content is within the above range, permeability of the ink composition with respect to a recording medium is improved, and adhesiveness between the recording medium and an obtained image is improved.

### (Water-Soluble Organic Solvent)

The ink composition of the present invention may contain an organic solvent other than the organic solvent represented by Formula (I).

The ink composition of the present invention contains water as a main solvent. However, according to the purpose, it is preferable to use an organic solvent other than the organic solvent represented by Formula (I).

As the organic solvent other than the organic solvent represented by Formula (I), a water-soluble organic solvent is preferable. The water-soluble organic solvent refers to an organic solvent of which solubility in water at 25°C is 10% by mass or more.

Examples of the water-soluble organic solvent usable in the present invention include the following.
- Alcohols (for example, methanol, ethanol, propanol, isopropanol, butanol, isobutanol, sec-butanol, tert-butanol, pentanol, hexanol, cyclohexanol, benzyl alcohol, and the like),
- Polyols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, 2-methylpropanediol, and the like),
- Polyol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, and the like),
- Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, and the like),
- Amides (for example, formamide, N,N-dimethylformamide, N,N-dimethylacetamide, and the like),
- Heterocycles (for example, 2-pyrrolidone, N-methyl-2-pyrrolidone, cyclohexyl pyrrolidone, 2-oxazolidone, 1,3-dimethyl-2-imidazolidinone, γ-butyrolactone, and the like),
- Sulfoxides (for example, dimethyl sulfoxide and the like),
- Sulfones (for example, sulfolane and the like),
- Others (urea, acetonitrile, acetone, and the like)

Examples of preferable water-soluble organic solvents include polyol ethers and heterocycles, and it is preferable to concurrently use these. As the polyol ethers, so-called glycol ethers are preferable. Specifically, tripropylene glycol monomethyl ether, dipropylene glycol monomethyl ether, and dipropylene glycol dimethyl ether are preferable, and 2-dipropylene glycol monomethyl ether is more preferable. As the heterocycles, 2-pyrrolidone, γ-butyrolactone, and the like are preferable, and 2-pyrrolidone is particularly preferable. Particularly, organic solvents having a high boiling point can be preferably used. The boiling point under normal pressure is preferably 120°C or higher and more preferably 150°C or higher.

One kind of the water-soluble organic solvent may be used singly, or plural kinds thereof may be concurrently used. The amount of the water-soluble organic solvent added to the aqueous ink composition is not limited, but is preferably 1% by mass to 60% by mass and more preferably 2% by mass to 35% by mass.

### <(B) Pigment>

The aqueous ink composition of the present invention contains (B) a pigment.

The pigment is not particularly limited, and can be appropriately selected according to the purpose. Examples thereof include known organic and inorganic pigments. The examples also include resin particles stained with a dye, commercially available pigment dispersions, and pigments having undergone surface treatment (for example, those obtained by dispersing a pigment in water, an organic liquid compound, or an insoluble resin as a dispersion medium, pigments having undergone surface treatment with a resin or a pigment derivative, and the like). Examples of the pigment include those disclosed in "Dictionary of Pigment" edited by Seishiro Ito (2000, published from Asakura Publishing Co., Ltd.), "Organic Pigment Handbook" written by Isao Hashimoto (2006, COLOR OFFICE Co., Ltd.), "Industrial Organic Pigments" edited by W. Herbst and K. Hunger (1992, published from Wiley-VHC), JP2002-12607A, JP2002-188025A, JP2003-26978A, JP2003-342503A, and JP2009-235370A.

Examples of the organic and inorganic pigments include yellow pigments, red pigments, magenta pigments, blue pigments, cyan pigments, green pigments, orange pigments, violet pigments, brown pigments, black pigments, white pigments, and the like.

As the yellow pigments, monoazo pigments such as C. I. Pigment Yellow 1, 2, 3, 4, 5, 10, 65, 73, 74, 75, 97, 98, 111, 116, 130, 167, and 205; monoazo lake pigments such as C. I. Pigment Yellow 61, 62, 100, 168, 169, 183, 191, 206, 209, and 212; disazo pigments such as C. I. Pigment Yellow 12, 13, 14, 16, 17, 55, 63, 77, 81, 83, 106, 124, 126, 127, 152, 155, 170, 172, 174, 176, 214, and 219; anthraquinone pigments such as C. I. Pigment Yellow 24, 99, 108, 193, and 199; monoazopyrazolone pigments such as C. I. Pigment Yellow 60; condensed azo pigments such as C. I. Pigment Yellow 93, 95, 128, and 166; isoindoline pigments such as C. I. Pigment Yellow 109, 110, 139, 173, and 185; benzimidazolone pigments such as C. I. Pigment Yellow 120, 151, 154, 175, 180, 181, and 194; azomethine metal complex pigments such as C. I. Pigment Yellow 117, 129, 150, and 153; quinophthalone pigments such as C. I. Pigment Yellow 138; and quinoxaline pigments such as C. I. Pigment Yellow 213 are preferable.

As the red pigment or magenta pigment, monoazo lake pigments such as C. I. Pigment Red 193; disazo pigments such as C. I. Pigment Red 38; naphthol AS pigments such as C. I. Pigment Red 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, and 269; β-naphthol pigments such as C. I. Pigment Red 3, 4, and 6; β-naphthol lake pigments such as C. I. Pigment Red 49, 53, and 68; naphthol AS lake pigments such as C. I. Pigment Red 237, 239, and 247; pyrazolone pigments such as C. I. Pigment Red 41; BONA lake pigments such as C. I. Pigment Red 48, 52, 57, 58, 63, 64:1, and 200; xanthene lake pigments such as C. I. Pigment Red 81:1, 169, and 172; thioindigo pigments such as C. I. Pigment Red 88, 181, and 279; perylene pigments such as C. I. Pigment Red 123, 149, 178, 179, 190, and 224; condensed azo pigments such as C. I. Pigment Red 144, 166, 214, 220, 221, 242, and 262; anthraquinone pigments such as C. I. Pigment Red 168, 177, 182, 226, and 263; anthraquinone lake pigments such as C. I. Pigment Red 83; benzimidazolone pigments such as C. I. Pigment Red 171, 175, 176, 185, and 208; quinacridone pigments such as C. I. Pigment Red 122, 202 (including mixtures containing C. I. Pigment Violet 19), 207, and 209; diketopyrrolopyrrole pigments such as C. I. Pigment Red 254, 255, 264, 270, and 272; and azomethine metal complex pigments such as C. I. Pigment Red 257 and 271 are preferable.

As the blue or cyan pigments, naphthol AS pigments such as C. I. Pigment Blue 25 and 26; phthalocyanine pigments such as C. I. Pigment Blue 15, 15:1, 15:2, 15:3, 15:4, 15:6, 16, 17:1, 75 and 79; dyed lake pigments such as C. I. Pigment Blue 1, 24:1, 56, 61, and 62; anthraquinone-based pigments such as C. I. Pigment Blue 60; indigo pigments such as C. I. Pigment Blue 63; and dioxazine pigments such as C. I. Pigment Blue 80 are preferable.

As the green pigment, dyed lake pigments such as C. I. Pigment Green 1, 4, and 58; phthalocyanine pigments usch as C. I. Pigment Green 7 and 36; and azomethine metal complex pigments such as C. I. Pigment Green 8 are preferable.

As the orange pigment, monoazo pigments such as C. I. Pigment Orange 1; β-naphthol pigments such as C. I. Pigment Orange 2, 3, and 5; naphthol AS pigments such as C. I. Pigment Orange 4, 24, 38, and 74; pyrazolone pigments such as C. I. Pigment Orange 13 and 34; benzimidazolone pigments such as C. I. Pigment Orange 36, 60, 62, 64, and 72; disazo pigments such as C. I. Pigment Orange 15 and 16; β-naphthol lake pigments such as C. I. Pigment Orange 17 and 46; naphthalene sulfonic acid lake pigments such as C. I. Pigment Orange 19; perinone pigments such as C. I. Pigment Orange 43; quinacridone pigments such as C. I. Pigment Orange 48 and 49; anthraquinone-based pigments such as C. I. Pigment Orange 51; isoindolinone pigments such as C. I. Pigment Orange 61; isoindoline-based pigments such as C. I. Pigment Orange 66; azomethine metal complex pigments such as C. I. Pigment Orange 68; and diketopyrrolopyrrole pigments such as C. I. Pigment Orange 71, 73, and 81 are preferable.

As the brown pigment, BONA lake pigments such as C. I. Pigment Brown 5; condensed azo pigments such as C. I. Pigment Brown 23, 41, and 42; and benzimidazolone pigments such as C. I. Pigment Brown 25 and 32 are preferable.

As the violet pigment, dyed lake pigments such as C. I. Pigment Violet 1, 2, 3, and 27; naphthol AS pigments such as C. I. Pigment Violet 13, 17, 25, and 50; anthraquinone lake pigments such as C. I. Pigment Violet 5:1; quinacridone pigments such as C. I. Pigment Violet 19; dioxazine pigments such as C. I. Pigment Violet 23 and 37; perylene pigments such as C. I. Pigment Violet 29; benzimidazolone pigments such as 32; and thioindigo pigments such as 38 are preferable.

As the black pigment, indazine pigments such as C. I. Pigment Black 1; carbon black as C. I. Pigment Black 7; graphite as C. I. Pigment Black 10; magnetite as C. I. Pigment Black 11; anthraquinone pigments such as C. I. Pigment 20; and perylene pigments such as C. I. Pigment Black 31 and 32 are preferable.

As the white pigment, zinc oxide as C. I. Pigment White 4; titanium oxide as C. I. Pigment White 6; zinc sulfide as C. I. Pigment White 7; zirconium oxide (zirconium white) as C. I. Pigment White 12; calcium carbide as C. I. Pigment White 18; aluminum oxide/silicon oxide (kaolin clay) as C. I. Pigment White 19; barium sulfide as C. I. Pigment White 21 or 22; aluminum hydroxide (alumina white) as C. I. Pigment White 23; silicon oxide as C. I. Pigment White 27; and calcium silicate as C. I. Pigment White 28 are preferable.

Inorganic particles used for the white pigment may be simple inorganic particles or composite inorganic particles containing an oxide of silicon, aluminum, zirconium, or titanium, an organic metal compound, or an organic compound.

Among these, the titanium oxide is preferably used. Moreover, the titanium oxide may be used concurrently with other white pigments (these white pigments may not be included in the aforementioned white pigments).

It is preferable to select a pigment, a dispersant, and a medium and set dispersion conditions and filtering conditions, such that a volume average particle size of the pigment particles preferably becomes 0.005 µm to 0.5 µm, more preferably becomes 0.01 µm to 0.45 µm, and even more preferably becomes 0.015 µm to 0.4 µm.

In the present invention, an average particle size and particle size distribution of particles are obtained by measuring a volume average particle size by means of a dynamic light scattering method by using a commercially available particle size analyzer such as Nanotrac particle size distribution analyzer UPA-EX150 (manufactured by NIKKISO CO., LTD.).

### (Water-Soluble Dye)

For the ink composition of the present invention, as a colorant, a dye can be used concurrently with the (B) pigment. As the dye, a water-soluble dye can be used, and the dye will be described below.

Examples of the water-soluble dye include acidic or direct dyes. The acidic dyes and direct dyes have a structure containing an acidic group as a solubilizing group. Examples of the acidic group include sulfonic acid groups and salts thereof, carboxylic acid groups and salts thereof, and phosphoric acid groups and salts thereof. The dyes may contain one or plural acidic groups, and the acidic groups may be in the form of a combination. Examples of chemical structures of chromophore groups contained in the water-soluble dye include structures based on azo, phthalocyanine, triphenylmethane, xanthene, pyrazolone, nitro, stilbene, quinoline, methine, thiazole, quinoneimine, indigoid, rhodamine, anthraquinone, and the like.

### (Disperse Dye)

In the present invention, a disperse dye can also be used.

Specific examples of preferable disperse dyes include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; C. I. Disperse Green 6:1 and 9; and the like.

One kind of the dye usable in the present invention may be used together with the (B) pigment, or two or more kinds thereof may be used.

### (Dispersant)

When a pigment is used, if necessary, a pigment dispersant may be used for preparing pigment particles. Examples of the usable pigment dispersant include activators such as higher fatty acid salts, alkyl sulfate, alkyl ester sulfuric acid salts, alkyl sulfonate, sulfosuccinate, naphthalene sulfonate, alkyl phosphate, polyoxyalkylene alkyl ether phosphoric acid salts, polyoxyalkylene alkyl phenyl ether, polyoxyethylene polyoxypropylene glycol, glycerin ester, sorbitan ester, polyoxyethylene fatty acid amide, and amine oxide; block and random copolymers consisting of two or more kinds of monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives; and salts of these.

For the ink composition of the present invention, a self-dispersion pigment can also be used. In the present invention, the self-dispersion pigment refers to a pigment that can disperse without a dispersant. The self-dispersion pigment is particularly preferably pigment particles having a polar group on the surface thereof.

The pigment particles of the present invention that have a polar group on the surface thereof refer to a pigment that is obtained by directly modifying the surface of pigment particles with a polar group or an organic substance that has an organic pigment core and is bonded to a polar group directly or via a joint (hereinafter, the organic substance is referred to as "pigment derivative").

Examples of the polar group include a sulfonic acid group, a carboxylic acid group, a phosphoric acid group, a boric acid group, and a hydroxyl group. Among these, a sulfonic acid group and a carboxylic acid group are preferable, and sulfonic acid group is more preferable.

Examples of a method for obtaining the pigment particles having a polar group on the surface thereof include the methods disclosed in WO97/48769, JP1998-110129A (JP-H10-110129A), JP1999-246807A (JP-H11-246807A), JP1999-57458A (JP-H11-57458A), JP1999-189739A (JP-H11-189739A), JP1999-323232A (JP-H11-323232A), and JP2000-265094A. In these methods, the surface of pigment particles are oxidized with an appropriate oxidant, whereby a polar group such as a sulfonic acid group or a salt thereof is introduced into at least a portion of the pigment surface. Specifically, the pigment particles can be obtained by oxidizing carbon black with concentrated nitric acid. Alternatively, in the case of a color pigment, the pigment particles can be prepared by oxidizing the surface of pigment particles with sulfamic acid, a sulfonated pyridine salt, amidosulfuric acid, or the like in sulfolane or N-methyl-2-pyrrolidone. Products that are oxidized too much and become water soluble due to the above reaction are removed, and the resultant is purified, whereby a pigment dispersion can be obtained. When a sulfonic acid group is introduced into the surface by oxidation, if necessary, the acidic group may be neutralized using a basic compound.

Examples of other method for obtaining pigment particles having a polar group on the surface thereof include the method of causing a pigment derivative to be adsorbed onto the surface of pigment particles by treatment such as milling as described in JP1999-49974A (JP-H11-49974A), JP2000-273383A, JP2000-303014A, and the like, the method of dissolving a pigment and a pigment derivative in a solvent and then crystallizing the resultant in a poor solvent as disclosed in JP2000-377068A, JP2001-1495A, and JP2001-234966, and the like. With any of these methods, pigment particles having a polar group on the surface thereof can be easily obtained.

The polar group on the pigment surface may be in the free state or in the form of a salt, or alternatively, it may have a counter salt. Examples of the counter salt include inorganic salts (lithium, sodium, potassium magnesium, calcium, aluminum, nickel, and ammonium) and organic salts (triethylammonium, diethylammonium, pyridinium, triethanolammonium, and the like), and among these monovalent counter salts are preferable.

As a method for dispersing a pigment, for example, various disperser such as a ball mill, a sand mill, an attritor, a roll mill, an agitator, a Henschel mixer, a colloid mill, an ultrasonic homogenizer, a pearl mill, wet-type jet mill, and a paint shaker can be used. Moreover, in order to remove coarse components of a pigment dispersion, it is preferable to use a centrifuge or a filter.

Provided that a mass of a pigment in the ink composition is P, and a mass of a dispersant in the ink composition is D, the amount of the dispersant added to the ink composition is set such that a mass ratio (D/P) preferably satisfies 0.01 ≤ D/P ≤ 2.0, more preferably satisfies 0.03 ≤ D/P ≤ 1.5, and even more preferably satisfies 0.05 ≤ D/P ≤ 0.6.

For dispersing the pigment, it is preferable to add dispersion aids generally called synergists (for example, SOLSPERSE series 5000, 12000, and 22000 commercially available from The Lubrizol Corporation, EFKA6745 commercially available from BASF, Japan, and the like), various surfactants, and defoamers in addition to the dispersant so as to improve dispersibility and wettability of the pigment.

In the present invention, when a pigment is dispersed, it is preferable to mix a pigment with a dispersant and then add an organic polar solvent to the mixture to disperse the pigment. Alternatively, it is preferable to mix an organic polar solvent with a dispersant and then add the pigment to the mixture to disperse the pigment. For dispersing the pigment, for example, each of the dispersers including a ball mill, a bead mill, a sand mill, a salt mill, an attritor, a roll mill, an agitator, a Henschel mixer, a colloid mill, an ultrasonic homogenizer, a pearl mill, a wet-type jet mill, and a paint shaker can be used. Among these, a bead mill disperser is preferable since it has excellent dispersibility.

The volume average diameter of beads of the bead mill used for dispersing a pigment is preferably 0.01 mm to 3.0 mm, more preferably 0.05 mm to 1.5 mm, and even more preferably 0.1 mm to 1.0mm. If such beads are used, a pigment dispersion having excellent stability can be obtained.

The content of the (B) pigment in the ink composition can be appropriately selected according to physical properties (specific gravity, coloring ability, color hue, and the like) of the pigment or according to the condition of the color combination of the ink composition to produce a printed matter. However, the content is preferably 0.1% by mass to 30% by mass, and more preferably 0.5% by mass to 20% by mass with respect to the total mass of the ink composition.

### <(C) Water>

The aqueous ink composition of the present invention contains water as a main solvent.

As water, deionized water not containing impurities, distilled water, and the like are preferably used.

The content of water in the ink composition of the present invention is preferably 10% by mass to 97% by mass. In the case of the ink composition of the present invention, the content is preferably 30% by mass to 95% by mass, and more preferably 35% by mass to 93% by mass.

### <Other Additives>

For the aqueous ink composition of the present invention, in addition to the essential components including the (A) specific polymer, (B) pigment, (C) water, and (D) organic solvent represented by Formula (I), the above-described dye, an organic solvent other than the organic solvent represented by Formula (I) and known additives can be concurrently used, as long as the effects of the present invention are not diminished. Hereinafter, additives that can be used for the aqueous ink composition of the present invention will be described.

### (Surfactant)

A surfactant can be added to the aqueous ink composition of the present invention. Examples of surfactants that can be preferably used include anionic surfactants such as dialkyl sulfosuccinates, alkyl naphthalene sulfonates, and fatty acid salts; nonionic surfactants such as polyoxyethylene alkyl ethers, polyoxyethylene alkyl allyl ethers, acetylene glycols, and polyoxyethylene/polyoxypropylene block copolymers; and cationic surfactants such as alkyl amine salts and quaternary ammonium salts. Particularly, anionic surfactants and nonionic surfactants can be preferably used.

In the present invention, polymer surfactants can be used, and preferable examples of the polymer surfactants include the following water-soluble resins. Examples of water-soluble resins that can be preferably used include styrene-acrylic acid-acrylic acid alkyl ester copolymers, styrene-acrylic acid copolymers, styrene-maleic acid-acrylic acid alkyl ester copolymers, styrene-maleic acid copolymers, styrene-methacrylic acid-acrylic acid alkyl ester copolymers, styrene-methacrylic acid copolymers, styrene-maleic acid half ester copolymer, vinylnaphthalene-acrylic acid copolymers, vinylnaphthalene-maleic acid copolymers, and the like.

### (Latex)

Latex can be added to the aqueous ink composition of the present invention. Examples of the latex that can be used in the present invention include the latex such as styrene-butadiene copolymers, polystyrene, acrylonitrile-butadiene copolymers, acrylic acid ester copolymers, polyurethane, silicon-acrylic acid copolymers, and acryl-modified fluororesin. The latex may be obtained by dispersing polymer particles by using an emulsifier, or may be so-called soap-free latex dispersed without an emulsifier. As the emulsifier, a surfactant is frequently used. However, polymers having a water-soluble group such as a sulfonic acid group and a carboxylic acid group (for example, polymers to which a solubilizing group is bonded by graft, and polymers which are obtained from a solubilizing group-containing monomer and a monomer having an insoluble site) can also be preferably used.

The volume average particle size of polymer particles in the latex used for the aqueous ink composition of the present invention is preferably from 10 nm to 300 nm, and more preferably from 10 nm to 100 nm. The average particle size of polymer particles in the latex can be measured by commercially available particle size analyzers using a light scattering method, an electrophoresis method, and a laser Doppler method.

When the latex is used for the aqueous ink composition of the present invention, the amount of the latex added is preferably 0.1% by mass to 20% by mass, and more preferably 0.5% by mass to 10% by mass in terms of a solid content with respect to the total amount of the ink composition.

### (Aqueous Polymer)

An aqueous polymer different from the specific polymer can be added to the aqueous ink composition of the present invention. Examples of preferable aqueous polymers include natural polymers, and specific examples thereof include proteins such as glue, gelatin, casein, and albumin; natural rubbers such as gum Arabic and gum tragacanth; glucosides such as sapoin; alginic acid derivatives such as alginic acid, alginic acid propylene glycol ester, triethanolamine alginate, and ammonium alginate; and cellulose derivatives such as methyl cellulose, carboxymethyl cellulose, hydroxyethyl cellulose, and ethyl hydroxyl cellulose.

Other preferable examples of the aqueous polymer include synthetic polymers like acrylic resins such as polyvinyl alcohols, polyvinyl pyrrolidones, polyacrylic acids, acrylic acid-acrylonitrile copolymers, potassium acrylate-acrylonitrile copolymers, vinyl acetate-acrylic acid ester copolymers, acrylic acid-acrylic acid ester copolymers; styrene acrylic resins such as styrene-acrylic acid copolymers, styrene-methacrylic acid copolymers, styrene-methacrylic acid-acrylic acid ester copolymers, styrene-α-methylstyrene-acrylic acid copolymers, and styrene-α-methylstyrene-acrylic acid-acrylic acid ester copolymers; styrene-maleic acid copolymers; styrene-maleic anhydride copolymers; vinyl naphthalene-acrylic acid copolymers; vinyl naphthalene-maleic acid copolymers; vinyl acetate-based copolymers and salts thereof such as vinyl acetate-ethylene copolymers, vinyl acetate-fatty acid vinyl ethylene copolymers, vinyl acetate-maleic acid ester copolymers, vinyl acetate-crotonic acid copolymers, and vinyl acetate-acrylic acid copolymers. Among these, nonionic aqueous polymers are preferable, and particularly preferable examples thereof include polyvinyl pyrrolidones.

The molecular weight of the aqueous polymer usable in the present invention is preferably from 1,000 to 200,000, and more preferably from 3,000 to 20,000.

The amount of the aqueous polymer added is preferably from 10% by mass to 1,000% by mass, and more preferably from 50% by mass to 200% by mass with respect to the pigment.

### (Polymerization Initiator)

The aqueous ink composition of the present invention may contain a polymerization initiator, within a range that does not diminish the effects of the present invention. It is preferable for the polymerization initiator to be water-soluble. Regarding the water solubility, the amount of the polymerization initiator dissolving in distilled water at 25°C is preferably 0.5% by mass or more, more preferably 1% by mass or more, and particularly preferably 3% by mass or more. Furthermore, a nonaqueous polymerization initiator in a dispersed state can be used.

In the present invention, it is preferable to use a polymerization initiator selected from a group consisting of α-hydroxyketones, α-aminoketones, and acylphosphine oxides. Specifically, it is possible to use water-soluble polymerization initiators such as 1-[4-(2-hydroxyethyl)-phenyl]-2-hydroxy-2-methyl]-1-propan-1-one, 1-hydroxycyclohexyl phenyl ketone, and 2-hydroxy-2-methyl-1-phenylpropan-1-one or nonaqueous polymerization initiators such as [bis(2,4,6-trimethylbenzoyl)-phenylphosphine oxide].

### (Sensitizing Dye)

In the present invention, it is possible and preferable to concurrently use a known sensitizing dye. Regarding solubility of the sensitizing dye, the amount of the sensitizing dye dissolving in distilled water at room temperature is preferably 0.5% by mass or more, more preferably 1% by mass or more, and particularly preferably 3% by mass or more. Furthermore, as the sensitizing dye, a nonaqueous polymerization initiator in a dispersed state can also be used.

Examples of the known sensitizing dye that can be concurrently used include N-[2-hydroxy-3-(3,4-dimethyl-9-oxo-9H-thioxanthen-2-yloxy)propyl]-N,N,N-trimethyl aluminum chloride, benzophenone, thioxanthone, anthraquinone derivatives, 3-acyl coumarin derivatives, terphenyl, styryl ketone, 3-(aroylmethylene)thiazoline, camphorquinone, eosin, rhodamine, erythrosine, modified products of these dyes obtained by making them water-soluble, dispersions of these dyes, and the like. Moreover, sensitizing dyes disclosed in JP2010-24276A and JP1994-107718A (JP-H06-107718A) can also be preferably used.

### (Polymerizable Compound)

The aqueous ink composition of the present invention may contain a polymerizable compound. Any type of polymerizable compound can be used as long as it is a water-soluble compound that has at least one ethylenically unsaturated bond, which can be radically polymerized, in a molecule. The polymerizable compound includes compounds having the chemical form of a monomer, oligomer, polymer, and the like. One kind of specific polymerizable compound may be used singly, or alternatively, in order to improve desired properties, two or more kinds thereof may be used concurrently at any ratio. It is preferable to concurrently use two or more kinds thereof.

The polymerizable compound used in the present invention dissolves in distilled water at room temperature, at least in an amount of 2% by mass or more. It is preferable for the polymerizable compound to dissolve in an amount of 15% by mass or more. It is particularly preferable for the polymerizable compound to be evenly mixed with water at any ratio.

Examples of the polymerizable compound include unsaturated carboxylic acids such as acrylic acid, methacrylic acid, itaconic acid, crotonic acid, isocrotonic acid, and malic acid; esters and salts of these; anhydrides having an ethylenically unsaturated group; acrylonitrile; styrene, various unsaturated polyesters; unsaturated polyethers; unsaturated polyamides; unsaturated urethane; vinyl ethers; allyl ethers; and the like. Among these, acrylic acid, methacrylic acid, and esters as well as salts of these are preferable. One kind of these polymerizable compounds may be used singly, or two or more kinds thereof may be used concurrently.

In order to impart water solubility, it is preferable for the polymerizable compound usable in the present invention to have a poly(ethyleneoxy) chain, a poly(propyleneoxy) chain, or an ionic group (for example, a carboxyl group, a sulfo group, or the like). When the polymerizable compound has a poly(ethyleneoxy) chain or a poly(propyleneoxy) chain, the number of unit of ethyleneoxy or propyleneoxy is preferably within a range of 1 to 10 and more preferably within a range of 1 to 5.

For the aqueous ink composition of the present invention, in addition to the aforementioned respective constituents, if necessary, various known additives such as a viscosity regulator, a surface tension regulator, a resistivity regulator, a film forming agent, a dispersant, a surfactant, a UV absorber, an antioxidant, a fading inhibitor, a fungicide, a rust inhibitor, a solid moistening agent, and fine silica particles can be appropriately selected and used. Examples of the additives include fine oil droplet particles such as liquid paraffin, dioctyl phthalate, tricresyl phosphate, and silicon oil; UV absorbers disclosed in JP1982-74193A (JP-S57-74193A), JP1982-87988A (JP-S57-87988A), and JP1987-261476A (JP-S62-261476A); fading inhibitors disclosed in JP1982-74192A (JP-S57-74192A), JP1982-87989A (JP-S57-87989A), JP1985-72785A (JP-S60-72785A), JP1986-146591A (JP-S61-146591A), JP1989-95091A (JP-H01-95091A), and JP1991-13376A (JP-H03-13376A); fluorescent whiteners disclosed in JP1984-42993A (JP-S59-42993A), JP1984-52689A (JP-S59-52689A), JP1987-280069A (JP-S62-280069A), JP1986-242871A (JP-S61-242871A), and JP1992-219266A (JP-H04-219266A, and the like; pH regulators such as sulfuric acid, phosphoric acid, citric acid, sodium hydroxide, potassium hydroxide, and potassium carbonate; and the like.

### <Method for Preparing Aqueous Ink Composition>

The method for preparing the aqueous ink composition of the present invention is not particularly limited. The aqueous ink composition can be prepared by stirring, mixing, and dispersing the respective components by a simple disperser like a container-driven medium mill such as a ball mill, a centrifugal mill, or a planetary ball mill, a high-speed rotation mill such as a sand mill, a medium stirring mill such as a stirring chamber-type mill, or a disper.

The respective components may be added in any order. Preferably, a pigment, a dispersant, water, and an organic solvent represented by Formula (I) are premixed and then dispersed, and the obtained dispersion is mixed with the specific polymer. In this case, the components are evenly mixed with each other when being added or after being added, by using a simple stirrer such as a three-one motor, a magnetic stirrer, a disper, or a homogenizer. The components may be mixed with each other by a mixer such as a line mixer. Moreover, in order to obtain a finer pigment, the components may be mixed with each other by a disperser such as a bead mill or a high-pressure jet mill. Moreover, according to the type of pigment or dispersant, the specific polymer may be added when the components are premixed before dispersing the pigment.

The surface tension at 25°C of the aqueous ink composition of the present invention is preferably 20 mN/m to 40 mN/m. The surface tension is measured at 25°C by using Automatic Surface Tensiometer CBVP-Z (manufactured by Kyowa Interface Science Co., LTD.). The viscosity of the aqueous ink composition is preferably from 5 mPa·s to 30 mPa·s, and more preferably from 6 mPa·s to 20 mPa·s. The viscosity of the ink composition is measured at 25°C by using VISCOMETER TV-22 (manufactured by TOKI SANGYO CO., LTD.).

### <Image Forming Method>

The image forming method of the present invention includes an ink applying step of applying the aqueous ink composition of the present invention onto a recording medium, and a step of removing water and an organic solvent from the applied aqueous ink composition to dry the aqueous ink composition. The image forming method may further include an irradiation step of irradiating the dried aqueous ink composition with an actinic energy ray. By performing these steps, an image formed of the aqueous ink composition fixed onto a recording medium is obtained.

### (Ink Applying Step)

Hereinafter, the ink applying step of the image forming method of the present invention will be described. The ink applying step of the present invention is not limited as long as it is a step of applying the aqueous ink composition of the present invention onto a recording medium.

The inkjet recording apparatus used for the image forming method of the present invention is not particularly limited, and it is possible to optionally select and use a known inkjet recording apparatus that can obtain desired resolution. That is, any of known inkjet recording apparatuses including commercially available products can eject the aqueous ink composition to a recording medium in the image forming method of the present invention.

Examples of the inkjet recording apparatus usable in the present invention include apparatuses having an ink supply system, a thermometer sensor, and heating means.

The ink supply system includes, for example, a main tank that contains the aqueous ink composition of the present invention, supply piping, an ink supply tank that is right ahead of an inkjet head, a filter, and a piezoelectric inkjet head. The piezoelectric inkjet head can be driven such that multi-size dots can be ejected preferably in an amount of 1 p1 to 100 p1, and more preferably in an amount of 8 p1 to 30 p1, preferably at a resolution of 320 × 320 dpi to 4,000 × 4,000 dpi (dot per inch), more preferably at a resolution of 400 × 400 dpi to 1,600 × 1,600 dpi, and even more preferably at a resolution of 720 × 720 dpi. In the present invention, "dpi" refers to the number of dots per 2.54 cm.

When the aqueous ink composition of the present invention is ejected, it is desirable for the temperature of the ink composition to be kept constant. Therefore, it is preferable for the inkjet recording apparatus to have means for stabilizing temperature of the ink composition. The site to be kept at a constant temperature includes a piping system from an ink tank (intermediate tank when the apparatus has an intermediate tank) to the jet surface of a nozzle and all members. That is, the area from the ink supply tank to the portion of inkjet head can be insulated and heated.

The temperature control method is not particularly limited. For example, it is preferable to provide plural temperature sensors to the respective piping portions so as to control heating conditions according to the flow rate of the ink composition and the environmental temperature. The temperature sensor can be provided to the ink supply tank and to the vicinity of the nozzle of the inkjet head. Moreover, it is preferable that the head unit to be heated be a heat-blocking unit or thermally insulated, such that the body of the apparatus is not influenced by the temperature of external air. In order to shorten printer startup time taken for heating or to reduce thermal energy loss, it is preferable to insulate the heating unit from other sites and to reduce a total thermal capacity thereof.

It is preferable for the aqueous ink composition to be ejected by the aforementioned inkjet recording apparatus, after the ink composition is heated to preferably 25°C to 80°C and more preferably 25°C to 50°C, and the viscosity thereof is preferably reduced to be 3 mPa·s to 15 mPa·s and more preferably reduced to be 3 mPa·s to 13 mPa·s. Particularly, it is preferable to use an aqueous ink composition having viscosity of 50 mPa·s or less at 25°C as the aqueous ink composition of the present invention, since such a composition can be excellently ejected. In this manner, a high degree of ejection stability can be realized.

When the aqueous ink composition is ejected, it is preferable for the temperature thereof to be kept constant. It is appropriate for the temperature of the aqueous ink composition to be controlled preferably within a range of a set temperature ± 5°C, more preferably within a range of a set temperature ± 2°C, and most preferably within a range of a set temperature ± 1°C.

In the present invention, the recording medium is not particularly limited, and recording media known as a support or a recording material can be used. Examples of the recording medium include paper, paper on which plastic (for example, polyethylene, polypropylene, polystyrene, and the like) is laminated, metal plates (for example, aluminum, zinc, copper, and the like), plastic film (for example, polyvinyl chloride resins, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, and the like), paper or plastic film on which the aforementioned metals are laminated or vapor-deposited, and the like. Among these, nonabsorptive recording medium can be preferably used as the recording medium since the ink composition of the present invention exhibits excellent adhesiveness. Accordingly, plastic substrates such as polyvinyl chloride, polyethylene terephthalate, and polyethylene are preferable, a polyvinyl chloride resin substrate is more preferable, and a polyvinyl chloride resin sheet or film is even more preferable.

### (Drying step)

By a drying step, the (C) water, the (D) organic solvent represented by Formula (I), and an aqueous organic solvent that is concurrently used if necessary (these will be collectively referred to as "water and organic solvents" appropriately) evaporate, whereby the aqueous ink composition having been ejected onto a recording medium is fixed. The step of drying and fixing the ejected aqueous ink composition of the present invention will be described.

In the drying step, it is preferable to performing heating. The heating means is not limited as long as it can remove the water and organic solvents, and it is possible to use a heating drum, hot air, an infrared lamp, a heating oven, heating using a heating plate, and the like.

The heating temperature is not particularly limited, as long as the temperature makes it possible to evaporate the water and organic solvents contained in the aqueous ink composition and to form a film of other polymers such as an aqueous polymer that is added if necessary. The effects are obtained when the temperature is 40°C or higher. The temperature is preferably about 40°C to 150°C, and more preferably about 40°C to 80°C.

The drying/heating time is not particularly limited, as long as the time makes it possible to evaporate the water and organic solvents contained in the aqueous ink composition and to form a polymer film. The time can be appropriately set in consideration to the composition of the aqueous ink composition to be used and the printing speed.

If necessary, the aqueous ink composition having been fixed by heating can be irradiated with an actinic energy ray so as to be fixed by light.

### (Irradiation Step)

The irradiation step that may be included in the image forming method of the present invention may be a step of irradiating the aqueous ink composition having been applied onto the recording medium with an actinic energy ray.

If the aqueous ink composition of the present invention is irradiated with an actinic energy ray, the image is fixed further. Accordingly, solvent resistance and the like of the printed matter can be further improved.

As the actinic energy ray usable in the irradiation step, ultraviolet ray (hereinafter, also referred to as UV ray), visible ray, electron beam, and the like can be used, and it is preferable to use UV ray.

The peak wavelength of UV ray is, for example, preferably 200 nm to 405 nm, more preferably 250 nm to 405 nm, and even more preferably 250 nm to 390 nm, though the peak wavelength also depends on the absorptivity of the sensitizing dye that is used if necessary.

It is preferable for UV ray irradiation to be performed such that illuminance of the exposed surface becomes, for example, 10 mW/cm² to 2,000 mW/cm² and preferably 20 mW/cm² to 1,000 mW/cm².

As the source of UV ray, a mercury lamp, gas laser, solid-state laser, and the like are mainly used, and a mercury lamp, a metal halide lamp, and a UV fluorescent lamp are widely known. Moreover, utilization of GaN-based semiconductor ultraviolet light-emitting device is extremely useful from the environmental aspect, and LED (UV-LED), LD (UV-LD) are expected to be used as the source of UV ray since these devices are compact, have a long life and high efficiency, and are low-cost.

It is appropriate for the aqueous ink composition of the present invention to be irradiated with UV ray as above for, for example, 0.01 seconds to 120 seconds and preferably for 0.1 seconds to 90 seconds.

The irradiation conditions and basic irradiation method are disclosed in JP1985-132767A (JP-S60-132767A). Specifically, it is preferable to use a method, in which a light source is disposed at both sides of a head unit including an ink ejection device and the head unit and a light source are scanned by a so-called shuttle method, or a method in which a separate light source that is not driven is used for irradiation. The irradiation of actinic energy ray is performed for a certain time (for example, for 0.01 seconds to 60 seconds, preferably for 0.01 seconds to 30 seconds, and more preferably for 0.01 seconds to 15 seconds) after the ink is landed and thermally fixed.

### Examples

Hereinafter, the present invention will be described in more detail based on examples, but the present invention is not limited to the examples. Moreover, unless otherwise specified, "part" and "%" are based on mass.

### (Production Example 1 of Specific Polymer)

### Synthesis of HMA/BzMA/MAA = 40/44/16 (Mass Ratio)

10.0 g of 2-butanone (manufactured by Wako Pure Chemical Industries, Ltd.) was put into a 200 mL three-neck flask equipped with a stirring blade and then heated and stirred for 10 minutes at 80°C under nitrogen gas flow. Thereafter, a mixed solution composed of 13.2 g of benzyl methacrylate (manufactured by Wako Pure Chemical Industries, Ltd.), 12.0 g of hexyl methacrylate (manufactured by Tokyo Chemical Industry Co., Ltd.), 4.8 g of methacrylic acid (manufactured by Wako Pure Chemical Industries, Ltd.), 0.11 g of 3-mercaptopropionic acid (manufactured by Tokyo Chemical Industry Co., Ltd.), 46 mg of dimethyl 2,2'-azobis(isobutyrate) (manufactured by Wako Pure Chemical Industries, Ltd.), 25 g of 2-butanone, and 5 g of 2-propanol (manufactured by Wako Pure Chemical Industries, Ltd.) was added dropwise to the resultant over 2 hours. The resultant was then further stirred for 2 hours, 46 mg of dimethyl 2,2'-azobis(isobutyrate) was added thereto, and the resultant was heated and stirred for 3 hours under reflux. 200 g of acetone was added to the obtained polymer solution, and the resultant was reprecipitated in 3 L of n-hexane. The generated precipitates were separated by filtration and then dried in vacuum, thereby obtaining 28 g of white solids. Subsequently, while being neutralized with 2.5 g of sodium hydrogen carbonate, the solids were diluted with water, thereby obtaining an aqueous polymer solution having a concentration of 17.5%.

The SP value of the obtained polymer that was evaluated by the Okitsu method was 19.9. Moreover, the glass transition temperature of the polymer was measured using a differential scanning calorimeter (EXTAR DSC6220 (manufactured by SII NanoTechnology Inc)), and the weight average molecular weight thereof was measured by gel permeation chromatography (HLC-8020GPC (manufactured by TOSOH CORPORATION)) under the following conditions.
Column of GPC: TSKgel SuperHZM-H, TSKgel SuperHZ4000, TSKgel SuperHZ200 (manufactured by TOSOH CORPORATION, 4.6 mm ID × 15 cm)
Measurement condition of GPC: temperature of 40°C, eluent: tetrahydrofuran

Specific polymers and comparative polymers used in Examples 2 to 12 and Comparative Examples 1 to 5 were produced in the same manner as in Example 1. The composition, compositional ratio, weight average molecular weight (Mw), SP value, and glass transition temperature (Tg) of the specific polymer or comparative polymers used in Examples 2 to 12 and Comparative Examples 1 to 5 are shown in Table 1.

Regarding the composition shown in Table 1, the respective abbreviations indicate the following components.
HMA: hexyl methacrylate
BzMA: benzyl methacrylate
MAA: methacrylic acid
EHMA: 2-ethylhexyl methacrylate
MMA: methyl methacrylate
BMA: butyl methacrylate
tBMA: tert-butyl methacrylate
HEMA: hydroxyethyl methacrylate
DMAAm: dimethyl acrylamide

### -Synthesis of Water-Soluble Resin (Dispersant) P-

A mixed solution obtained by mixing 478 parts of methyl methacrylate with 172 parts of methacrylic acid, 350 parts of 2-ethylhexyl methacrylate, and 22.05 parts of 2,2'-azobis(2-methylbutyronitrile) was added dropwise over 2 hours to 187.5 parts of isopropanol that was heated to 80°C in a nitrogen atmosphere. After the dropwise addition ended, the resultant was kept at 80°C for 4 hours and then cooled to 25°C. The solvent was removed from the resultant under reduced pressure, thereby obtaining an aqueous solution containing a water-soluble resin (dispersant) P having a weight average molecular weight of about 30,000 and an acid value of 154 mg KOH/g.

In the present invention, other water-soluble resins can be synthesized in the same manner as described above.

### -Preparation of Dispersion N of Uncrosslinked Resin-Coated Pigment-

150 parts of the water-soluble resin P obtained as above was dissolved in water, and an aqueous solution containing the water-soluble resin P was prepared, such that pH of the solution became 10.1 after it was neutralized with an aqueous potassium hydroxide solution and the concentration of the water-soluble resin became 30.6% by mass.

90 parts of Pigment Blue 15:3 (manufactured by Dainichiseika Color & Chemicals Mfg Co., Ltd., phthalocyanine blue A220) and 362 parts of water were mixed with 147 parts of the obtained aqueous solution containing the water-soluble resin P, and the resultant was dispersed for 3 hours by using a bead mill (zirconia beads of 0.1 mmφ), thereby obtaining a dispersion N of an uncrosslinked resin-coated pigment having a pigment concentration of 15% by mass.

### [Example 1]

1.43 g of the dispersion N of an uncrosslinked resin-coated pigment, 0.9 g of 2-methyl-1,3-propanediol as the organic solvent represented by Formula (I), 0.1 g of Zonyl FSN (manufactured by DuPont, fluorosurfactant), and 5.71 g of the specific polymer (containing 17.5% solid content) described in Production Example 1 were added to 1.86 g of pure water and stirred. After the resultant was filtered through a 1 µm filter, and then an aqueous ink composition for inkjet was prepared.

The viscosity of the obtained aqueous ink composition was measured at 25°C by using VISCOMETER TV-22 (manufactured by TOKI SANGYO CO., LTD.).

### [Examples 2 to 12 and Comparative Examples 1 to 5]

Aqueous ink compositions were prepared in the same manner as in Example 1, except that the specific polymer used for preparing the aqueous ink composition of Example 1 was replaced with the specific polymer or comparative polymer shown in Table 1, and the organic solvent represented by Formula (I) was replaced with the compound 1 or compound 2 shown in Table 1. In Example 8, the amount of the specific polymer used for preparing an aqueous ink composition was half of the Example 1. Moreover, A-9 used in Example 12 was aforementioned example compound A-9.

In Table 1, the compound 1 and compound 2 as the organic solvent represented by Formula (I) have the following structure.

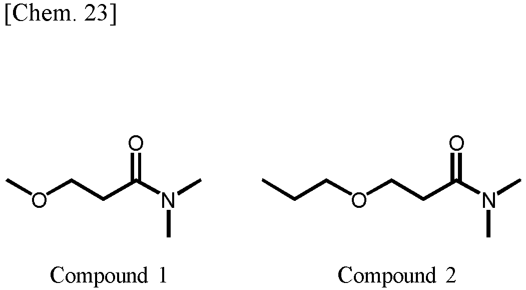

**[Table 1]**

| | Specific polymer or comparative polymer | | | | | Organic solvent represented by Formula (I) | Viscosity of ink composition (mPa·s at 25°C) |
|---|---|---|---|---|---|---|---|
| | Structure (compositional mass ratio) | Mw | SP value | Tg (°C) | Used amount | | |
| Example 1 | HMA/BzMA/MAA | 50,000 | 19.9 | 44 | 10% | Compound 1 | 7 |
| | (40/44/16) | | | | | | |
| Example 2 | EHMA/MMA/MAA | 50,000 | 19.0 | 41 | 10% | Compound 1 | 7 |
| | (56/28/16) | | | | | | |
| Example 3 | BMA/tBMA/MAA | 50,000 | 19.2 | 61 | 10% | Compound 1 | 7 |
| | (62/22/16) | | | | | | |
| Example 4 | EHMA/HEMA/MAA | 50,000 | 18.9 | 20 | 10% | Compound 1 | 7 |
| | (74/10/16) | | | | | | |
| Example 5 | BMA/BzMA/ MMA/MAA | 50,000 | 20.0 | 62 | 10% | Compound 1 | 7 |
| | (40/34/10/16) | | | | | | |
| Example 6 | EHMA/MMA/MAA | 50,000 | 20.0 | 102 | 10% | Compound 1 | 7 |
| | (10/75/15) | | | | | | |
| Example 7 | EHMA/MMA/MAA | 50,000 | 19.0 | 41 | 10% | Compound 2 | 7 |
| | (56/28/16) | | | | | | |
| Example 8 | HMA/BzMA/MAA | 50,000 | 19.9 | 44 | 5% | Compound 1 | 4 |
| | (40/44/16) | | | | | | |
| Example 9 | EHMA/MAA | 50,000 | 19.9 | 52 | 10% | Compound 1 | 7 |
| | (60/40) | | | | | | |
| Example 10 | BMA/MAA | 50,000 | 18.9 | 33 | 10% | Compound 1 | 7 |
| | (90/10) | | | | | | |
| Example 11 | EHMA/DMAAm | 40,000 | 19.9 | 22 | 10% | Compound 1 | 7 |
| | (60/40) | | | | | | |
| Example 12 | A-9 | 70,000 | 19.8 | 20 | 10% | Compound 1 | 7 |
| Comparative Example 1 | HEMA/BzMA/ EHMA/MAA | 50,000 | 20.9 | 62 | 10% | Compound 1 | 7 |
| | (30/30/24/16) | | | | | | |
| Comparative Example 2 | HMA/BzMA/MAA | 50,000 | 19.9 | 44 | 10% | None | 7 |
| | (40/44/16) | | | | | | |
| Comparative Example 3 | tBMA/EHMA/MAA | 50,000 | 18.5 | 40.5 | 10% | Compound 1 | - |
| | (26/58/16) | | | | | | |
| Comparative Example 4 | EHMA/MAA | 50,000 | 22.7 | 151 | 10% | Compound 1 | 7 |
| | (20/80) | | | | | | |
| Comparative Example 5 | BMA/MAA | 50,000 | 18.4 | 23 | 10% | Compound 1 | 7 |
| | (98/2) | | | | | | |

### [Comparative Example 6]

An aqueous ink composition was prepared in the same manner as in Example 1, except that Vinyblan 603 (containing 50% solid content) manufactured by Nissin Chemical Co., Ltd. was used instead of the specific polymer of Example 1.

Vinyblan 603 is a vinyl chloride-based emulsion. The amount of a hydrophilic group contained in this compound does not fall within a range of 5% by mass to 45% by mass.

The respective aqueous ink compositions obtained as above were evaluated as follows, and the evaluation results are summarized in Table 2.

### <Waterproofness>

The aqueous ink composition was filled in an inkjet drawing apparatus DMP2831 (manufactured by FUJIFILM Dimatix, Inc.), and a solid image was printed on an adhesive vinyl chloride sheet (manufactured by Lintec Corporation, P-280RW). The printed image was rubbed 100 times against a cotton swab wet with water, and then the rubbed solid image was visually observed.

### (Evaluation Criteria)

A: The image does not show change.
B: The image is slightly peeled, but it is unproblematic for practical use.
C: The image is peeled, and it is problematic for practical use.

### <Landing Interference>

The ink composition was filled in DMP2831 (manufactured by FUJIFILM Dimatix, Inc.), and fine lines (width: 2 mm) were printed at an interval of 30 µm on an adhesive vinyl chloride sheet (P-280RW) and evaluated.

### (Evaluation Criteria)

A: No interference occurs between ink droplets adjacent to each other, and lines can be clearly drawn.
B: Interference occurs between ink droplets adjacent to each other, but it is unproblematic for practical use.
C: Interference occurs between ink droplets adjacent to each other, and it is problematic for practical use.

### (Adhesiveness: Cross Hatch Test)

As a method for evaluating adhesiveness between the image and a substrate, a cross hatch test (JIS K 5600-5-6) was performed. By the same inkjet image recording method as used for the evaluation of waterproofness described above, a solid image in which an average film thickness of the image portion was 12 µm was drawn.

Thereafter, a cross hatch test was performed on each of the printed matters. The adhesiveness was evaluated on a scale of 0 to 5 according to JIS K5600-5-6. If an image is evaluated to be 0, this means that the cut edge of the image is perfectly smooth, and peeling does not occur in any cell of the lattice.

**[Table 2]**

| | Waterproofness | Landing interference | Adhesiveness |
|---|---|---|---|
| Example 1 | A | A | 0 |
| Example 2 | A | A | 0 |
| Example 3 | A | A | 0 |
| Example 4 | A | A | 0 |
| Example 5 | A | A | 2 |
| Example 6 | A | A | 0 |
| Example 7 | A | A | 0 |
| Example 8 | A | B | 0 |
| Example 9 | B | A | 0 |
| Example 10 | A | A | 0 |
| Example 11 | A | A | 0 |
| Example 12 | A | A | 0 |
| Comparative Example 1 | C | A | 5 |
| Comparative Example 2 | C | A | 5 |
| Comparative Example 3 | Precipitation | | |
| Comparative Example 4 | C | A | 3 |
| Comparative Example 5 | Precipitation | | |
| Comparative Example 6 | A | C | 0 |

From the result shown in Table 2, it was understood that the Examples 1 to 12, which contain the specific polymer and the organic solvent represented by Formula (I), have excellent waterproofness, do not cause landing interference, and exhibit excellent adhesiveness with respect to a recording medium. On the contrary, Comparative Example 1 in which the SP value of the polymer exceeded the upper limit of range of the present invention had insufficient waterproofness, and adhesiveness thereof with respect to a recording medium was defective, hence peeling occurred. Moreover, in Comparative Example 3 in which the SP value of the polymer is smaller than the lower limit of range of the present invention, precipitation occurred at the time of preparing the aqueous ink composition, and accordingly, an image could not be drawn by inkjet. Furthermore, Comparative Example 2 not containing the organic solvent represented by Formula (I) had insufficient waterproofness, and adhesiveness thereof with respect to a recording medium was defective, hence peeling occurred.

From the above results, it is understood that the aqueous ink composition of the present invention that contains the specific polymer and the organic solvent represented by Formula (I) does not cause landing interference when being deposited in the form of droplets, forms an image having excellent waterproofness, and exhibits excellent adhesiveness with respect to a recording medium.

## Claims

1. An aqueous ink composition comprising:
(A) a polymer that has an SP value of 18.6 to 20 and contains a hydrophilic group-containing repeating unit (a1) of 5% to 45% by mass;
(B) a pigment;
(C) water; and
(D) an organic solvent represented by the following Formula (I), 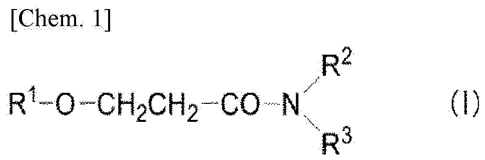 in Formula (I), R¹ represents an alkyl group having 1 to 8 carbon atoms, and each of R² and R³ independently represents a hydrogen atom or an alkyl group having 1 to 6 carbon atoms that may have an ether bond in a carbon chain, R² and R³ may form a ring by being bonded to each other.

2. The aqueous ink composition according to claim 1,
wherein the hydrophilic group in the repeating unit (a1) is at least one kind of group selected from a group consisting of a carboxyl group, an amide group, a carbamoyl group, an alkyl-substituted carbamoyl group, an alcoholic hydroxyl group, and a group having a polyalkyleneoxy structure.

3. The aqueous ink composition according to claim 1 or 2,
wherein the (A) polymer is a polymer further containing a repeating unit (a2) having a group represented by the following Formula (1), 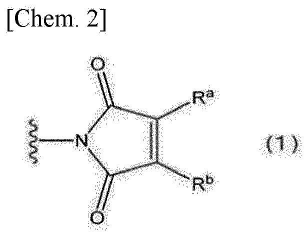 in Formula (1), each of R^{a} and R^{b} independently represents an alkyl group having 1 to 4 carbon atoms, and R^{a} and R^{b} may form a 4- to 6-membered ring by being bonded to each other, the wavy line represents a position where the group is bonded to a polymer side chain.).

4. The aqueous ink composition according to any one of claims 1 to 3,
wherein the (A) polymer has 8 to 1,000 of the group represented by Formula (1) in a single molecule.

5. The aqueous ink composition according to any one of claims 1 to 4,
wherein the repeating unit (a2) is represented by the following Formula (1-2), 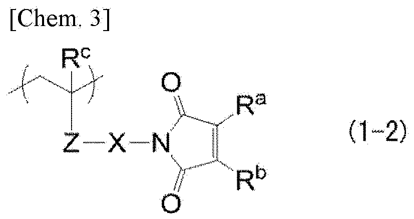 in Formula (1-2), each of R^{a} and R^{b} independently represents an alkyl group having 1 to 4 carbon atoms, and R^{a} and R^{b} may form a 4- to 6-membered ring by being bonded to each other, Z represents a single bond, -COO-*, or -CONR^{d}-*, and R^{d} represents a hydrogen atom or an alkyl group having 1 to 4 carbon atoms, * represents a position where Z is bonded to X, X represents an alkylene group having 1 to 16 carbon atoms, R^{c} represents a hydrogen atom or a methyl group.

6. The aqueous ink composition according to any one of claims 1 to 5,
wherein the repeating unit (a1) is represented by the following Formula (2), 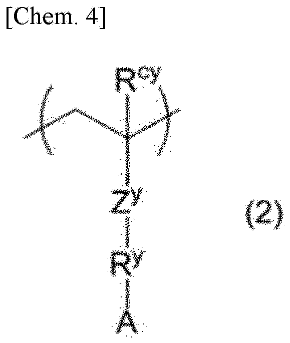 in Formula (2), R^{cy} represents a hydrogen atom or a methyl group, Z^{y} represents -COO-*, -CONR^{dy}-*, or a single bond, and R^{dy} represents a hydrogen atom or an alkyl group having 1 to 4 carbon atoms, * represents a position where Z^{y} is bonded to R^{y}, R^{y} represents a single bond, an alkylene group having 1 to 20 carbon atoms, an arylene group having 6 to 20 carbon atoms, or an aralkylene group having 7 to 20 carbon atoms, A represents a hydrophilic group.

7. The aqueous ink composition according to any one of claims 1 to 6,
wherein the content of the (A) polymer is 1% by mass to 30% by mass with respect to the total amount of the aqueous ink composition.

8. The aqueous ink composition according to any one of claims 1 to 7,
wherein the content of the (C) water is 10% by mass to 97% by mass with respect to the total amount of the aqueous ink composition.

9. The aqueous ink composition according to any one of claims 1 to 8, further comprising a surfactant.

10. The aqueous ink composition according to any one of claims 1 to 9 that has ink viscosity of 5 mPa·sec to 30 mPa·sec.

11. An image forming method comprising:
applying the aqueous ink composition according to any one of Claims 1 to 10 onto a recording medium; and
removing the (C) water and the (D) organic solvent from the applied aqueous ink composition to dry the aqueous ink composition.
